(19) Europäisches Patentamt
European Patent Office
Office européen des brevets

(11) **EP 3 514 347 A1**

(12) **EUROPÄISCHE PATENTANMELDUNG**

(43) Veröffentlichungstag:
24.07.2019 Patentblatt 2019/30

(21) Anmeldenummer: 19157101.7

(22) Anmeldetag: 26.02.2014

(51) Int Cl.:
F02B 27/00 (2006.01)    F02B 33/32 (2006.01)
F02B 29/00 (2006.01)    F02B 33/42 (2006.01)
F02B 37/00 (2006.01)    F02B 37/16 (2006.01)
F04B 43/00 (2006.01)    F04B 45/04 (2006.01)
F04B 45/053 (2006.01)

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR

(30) Priorität: 10.09.2013 EP 13183821

(62) Dokumentnummer(n) der früheren Anmeldung(en)
nach Art. 76 EPÜ:
14156867.5 / 2 846 020

(71) Anmelder: Hofmann, Arno
63571 Gelnhausen (DE)

(72) Erfinder: Hofmann, Arno
63571 Gelnhausen (DE)

(74) Vertreter: Tergau & Walkenhorst
Patentanwälte PartGmbB
Lurgiallee 12
60439 Frankfurt am Main (DE)

Bemerkungen:
Diese Anmeldung ist am 14.02.2019 als
Teilanmeldung zu der unter INID-Code 62 erwähnten
Anmeldung eingereicht worden.

(54) **VERBRENNUNGSMOTOR**

(57) Bei einem Verfahren zum Betreiben eines Verbrennungsmotors (1, 1', 1", 1'''), bei dem während eines Auslasstakts eines Zylinders (2) darin befindliches Abgas aus dem Zylinder (2) ab- und einer Auspuffanlage (12) zugeführt wird, soll auf besonders einfache und zuverlässige Weise eine besonders hohe spezifische Leistungsausbeute des Verbrennungsmotors (1, 1', 1", 1''') und/oder ein besonders gering gehaltener spezifischer Brennstoffverbrauch ermöglicht werden. Dazu wird erfindungsgemäß in einer ersten Taktphase des Auslasstakts der Impuls der aus dem Zylinder (2) abströmenden Abgasdruckwelle ganz oder teilweise auf die Primärseite einer Abgasladepumpe (30, 30',30") übertragen, bevor in einer zweiten Taktphase des Auslasstakts das Abgas zur Auspuffanlage (12) geleitet wird.

FIG. 1

EP 3 514 347 A1

**Beschreibung**

Die Erfindung bezieht sich auf einen Verbrennungsmotor mit einer Anzahl von Zylindern, in denen jeweils ein auf eine gemeinsame Kurbelwelle wirkender Arbeitskolben geführt ist, wobei der Brennraum des oder jedes Zylinders jeweils einlassseitig über ein ansteuerbares Einlassventilsystem mit einem Gaseinlasssystem und auslassseitig über ein ansteuerbares Auslassventilsystem mit einer Auspuffanlage verbunden ist.

Verbrennungsmotoren oder Wärmekraftmaschinen finden in weiten Bereichen vielfältigen Einsatz, beispielsweise als Antriebseinheiten von Kraftfahrzeugen oder auch in stationärer Ausführung in Industrieanlagen oder anderen technischen Einrichtungen. Ein Verbrennungsmotor oder eine Wärmekraftmaschine kann dabei im Otto- oder Dieselverfahren mit unterschiedlichen flüssigen oder gasförmigen Brennstoffen betrieben werden. Den verschiedenen Bauformen ist gemeinsam, dass üblicherweise in einem Brennraum eines Zylinders (oder in analoger Ausführung bei einem Wankelmotor in einer Drehscheibenkammer) ein komprimiertes Brennstoff-Luft-Gemisch zur Explosion gebracht wird, so dass in Reaktion hierauf ein in dem jeweiligen Zylinder verschiebbar angeordneter Kolben einen Arbeitshub ausführt und dabei eine Motorwelle arbeitsleistend antreibt. Nach der Vollendung des Arbeitshubs, also nach vollständiger Expansion des verbrannten Arbeitsgases im Zylinder, wird das verbrannte Arbeitsgas als Abgas während eines Auslasstakts des jeweiligen Zylinders einer auslassseitig an diesen angeschlossenen Auspuffanlage zugeführt.

In gängiger Bauweise kann der Verbrennungsmotor dabei als 4-Takt-Motor ausgeführt sein, bei dem die Freigabe des in die Auspuffanlage führenden Abgassystems über ein im Zylinder angeordnetes Auslassventil erfolgt. In alternativer gängiger Bauweise kann der Verbrennungsmotor aber auch als 2-Takt-Motor ausgeführt sein, bei dem der Auslasstakt als Bestandteil des eigentlichen Arbeitstakts ausgeführt ist, wobei die Freigabe des in die Auspuffanlage mündenden Abgassystems schlitzgesteuert erfolgt, indem der Kolben in der Endphase seiner Hubbewegung über im Zylinder angeordnete Auslassschlitze hinweggleitet und diese anschließend freigibt. Ebenso ist gaseinlassseitig bei 4-Takt-Motoren üblicherweise ein entsprechendes Einlassventilsystem vorgesehen, wohingegen diese Funktionalität bei 2-Takt-Motoren ebenfalls durch im Zylindermantel angeordnete Spülschlitze dargestellt wird. Weiterhin existieren Ventilsysteme auf Basis von Drehschiebern, bei denen Kanalquerschnitte im Zylinderkopf durch rotierende Drehschieber freigegeben bzw. verschlossen werden. Drehschiebersteuerungen werden für Zwei- und Viertaktverfahren angewendet. Die im folgenden stellvertretend verwendeten Begriffe "Einlassventilsystem" und "Auslassventilsystem" beziehen sich daher im Falle von 2-Takt-Motoren ausdrücklich auch auf die entsprechenden Schlitzanordnungen im Zylindermantel, über die die entsprechenden Ventilfunktionen analog zur eigentlichen Verkörperung in 4-Takt-Motoren mit Hilfe von Tellerventilen bzw. Drehschiebern dargestellt werden.

Für Verbrennungsmotoren oder Wärmekraftmaschinen jeglicher Bauart (z. B. auch Stirlingmotoren, Dampfmotoren, etc) werden seit geraumer Zeit als gängige Auslegungsziele eine Steigerung der nutzbaren Arbeitsleistung pro Hubraumeinheit des jeweiligen Zylinders und/oder eine Effizienzsteigerung/Verminderung des spezifischen Brennstoffverbrauchs angestrebt. Im Hinblick auf diese Auslegungsziele sind einige Konzepte zur Nutzung oder Rückgewinnung der im aus dem Zylinder abströmenden Abgas mitgeführten Restenergie entwickelt worden.

Hierzu zählt zum Einen die Abgasturboaufladung. Die Abgasturboaufladung entzieht dem Abgasstrom Enthalpie und führt diese dem Motor in Form von Kompressionsarbeit eines Frischgasstromes wieder zu. Gemäß den Eigenschaften einer Strömungsmaschine zeigt die Abgasturboaufladung unter der Voraussetzung eines kontinuierlichen Abgasenthalpiestroms hohe Wirkungsgrade. Je größer die stochastischen Schwankungen des Abgasenthalpiestroms werden, desto schlechter gestaltet sich jedoch der Wirkungsgrad der Turbine. Dies hat zur Folge, dass Abgasturbolader in der Praxis für Kolbenmotoren erst ab einer Zylinderzahl von drei gute Wirkungsgrade zeigen, an Zweizylindermotoren nur bedingt (vorzugsweise bei symmetrischer Zündfolge) einsetzbar und an Einzylindermotoren nicht effizient betreibbar sind.

Verbrennungsmotoren mit kleinen Hubräumen erfordern prinzipiell kleine Schaufeldurchmesser an Turbine und Verdichter. Sowohl der Turbinen-, als auch der Verdichterwirkungsgrad nehmen mit kleineren Schaufeldurchmessern ab, da u.a. die Spaltverluste zwischen Schaufeln und Gehäuse überproportional wachsen. Ungünstig erweist sich auch das Ansprechverhalten (Instationärverhalten) von Abgasturboladern bei Lastsprüngen im Verbrennungsmotor, da ausgehend von niedriger Last (geringe Abgasenthalpie) der allmähliche Enthalpieanstieg vor der Turbine das Laufzeug auf Grund von dessen Massenträgheit erst verzögert beschleunigt, was bekanntermaßen als so genanntes "Turboloch" zu einem langsamen Druckanstieg auf der Verdichterseite führt. Dieser Effekt tritt bei hubraumkleinen Motoren ausgeprägter auf, da das Massenträgheitsmoment des Laufzeugs nicht so stark abnimmt wie der Abgasenthalpiestrom, und ist bei Ottomotoren wegen der größeren Spreizung der Abgasenthalpie ausgeprägter als bei Dieselmotoren. Dynamisch betriebene Kleinmotoren, wie in Fahrzeugen und stromgeführten Blockheizkraftwerken, sind mit Abgasturboladern daher kaum betreibbar.

Der als Alternative denkbare Druckwellenlader ist ein Aufladesystem, das ebenso wie der Abgasturbolader dem Abgasstrom Enthalpie entzieht und diese der angesaugten Verbrennungsluft als Kompressionsarbeit zuführt. Der Druckwellenlader zeigt ein gutes Instationärverhalten und hohe Ladegrade auch bei niedrigen Motordrehzahlen. Nachteilig erweist sich das zwischen Abgas und Frischluft "offene" Gaswechselsystem dadurch, dass der Lader beim Startvorgang des Motors umgangen werden muss, um Spülkurzschlüsse zu verhindern, und er auch keine Drosselung der Ansaugluft verträgt, wodurch der Lader für dynamisch betriebene Ottomotoren im Teillastbetrieb ungeeignet erscheint. Auch ist das akustische Verhalten auf Grund der direkten Verbindung von Abgas- und Frischgasleitung problematisch. Großes Bauvolumen und Gewicht sowie die Notwendigkeit, den Lader synchron zur Motordrehzahl anzutreiben, machen den Druckwellenlader für kleinvolumige Ottomotoren unrentabel.

Eine weitere Möglichkeit, Abgasenthalpie in Nutzarbeit umzuwandeln, kann durch eine nochmalige Expansion des Abgases aus dem Arbeitszylinder eines Verbrennungsmotors in einem weiteren Expansionszylinder erfolgen. Unter den Veröffentlichungen u.a. von Mario Illien und Gerhard Schmitz (http://www.5-takt-motor.com/de/News.html) ist ein solches System beschrieben, das zwei im Viertaktverfahren und mit gleicher Zündfolge arbeitende Hochdruckzylinder mit einem hubraumgrößeren Niederdruckzylinder, der 180° Kurbelwelle versetzt arbeitet, koppelt. Erreicht ein Hochdruckzylinder nach dem Arbeitstakt den unteren Totpunkt (UT), so öffnet dessen Auslasssystem den Kanal zum Niederdruckzylinder, der sich im oberen Totpunkt (OT) befindet. Wegen des größeren Hubvolumens des Niederdruckzylinders expandiert das Arbeitsgas weiter, obwohl durch den aufwärts gehenden Kolben des Hochdruckzylinders sich dessen Volumen wieder verkleinert.

Thermodynamisch wird mit dieser Anordnung das Expansionsverhältnis im Verbrennungstakt vergrößert, wodurch der thermodynamische Wirkungsgrad steigt.

Nachteilig an Systemen mit separatem Niederdruckzylinder ist die hohe Wärmebelastung des Überströmkanals im Zylinderkopf zu sehen, der höhere Abgasgegendruck bei Ventilüberschneidung (Spülung) eines Hochdruckzylinders, der erhebliche Mehraufwand an Motorgewicht und -bauraum für den Niederdruckzylinder, die Reibungsverluste (zusätzliche Kolbengruppe und Kurbeltrieb) des Niederdruckzylinders und die Tatsache, dass der sinnvoller Weise im Zweitakt arbeitende Niederdruckzylinder mit je zwei Hochdruckzylindern gleichen Zündabstands kombiniert werden sollte. Die Systemkosten liegen sehr hoch. Somit stellt sich diese Bauart für Einzylindermotoren wenig aussichtsreich dar.

Aus den DE 36 25 050 A1, DE 36 25 048 A1, DE 36 25 051 A1, DE 36 25 053 A1, DE 33 18 136 A1 und der Veröffentlichung Schatz et al.,„Pulse Charging - a new approach for dynamic charging", Second International Conference New Development Powertrain Chassis, England 1989, ist als weiteres alternatives Konzept zur Leistungs- oder Effizienzsteigerung eines Verbrennungsmotors ein so genannter "Abgasimpulslader" bekannt. Der Abgasimpulslader wandelt Abgasenthalpie eines Verbrennungsmotors in Kompressionsarbeit von Frischgas um. Das System besteht aus einem Freikolben, der in einem Zylinder geführt wird. Eine Seite des Zylinders ist mit dem Auslasssystem des Motors über einen Abgaszuströmkanal verbunden, die andere Seite des Zylinders mit dem Einlasssystem. Eine Feder drückt den Freikolben an dessen abgasseitigen Anschlag im Zylinder, so dass der Freikolben im Druck-unbelasteten Zustand ein maximales Frischgas-seitiges Volumen freigibt und entsprechend ein minimales Abgas-seitiges Volumen. Der Freikolben besitzt wahlweise mittig auf dessen Abgasseite eine Schirmung, die das abgasseitige Zylindervolumen ab einem bestimmten Freikolbenhub zum Abgasabströmkanal freigibt, um das Abgas in den Schalldämpfer zu leiten, oder ein durch den Abgasdruck in der Abgasladepumpe gesteuertes Ventil, das den Abgasabströmkanal freigibt bzw. verschließt. Die Steuerung des Abgasabströmkanals durch ein von der Freikolbenbewegung zumindest teilweise unabhängig bewegtes, durch das Abgas angetriebene Ventil beabsichtigt, einen verlängerten Expansionshub des Freikolbens zu ermöglichen. Frischgasseitig kann das Zylindervolumen atmosphärische Luft über ein Rückschlagventil ansaugen, die bei Volumenverkleinerung in das Einlasssystem des Motors gedrückt wird.

Die Veröffentlichung "Pulse Charging - a new approach for dynamic charging" beschreibt Versuchsergebnisse des Abgasimpulsladers an einem Zweizylindermotor. Öffnet ein Auslassventil eines Motorzylinders, strömt Abgas in den Abgasimpulslader und beschleunigt den Freikolben gegen die Federkraft. Das Abgas verrichtet Expansionsarbeit im Abgasimpulslader, bis die Schirmung am Freikolben den Entspannungskanal freigibt. Die Massenträgheit des Freikolbens lässt diesen im Zylinder weiterlaufen, bis dessen kinetische Energie in Summe die potentielle Energie der Feder und der durch den Freikolben verdichteten Frischluft im Einlasssystem erreicht hat. Durch die symmetrische Phasenlage der beiden Motorzylinder zueinander wird der Freikolben durch das Öffnen des Motorauslassventils des ersten Motorzylinders um dessen Kolbenlage im UT bewegt, was einer Kolbenlage des zweiten Motorzylinders im UT kurz vor schließendem Motoreinlassventil entspricht, so dass ein Teil der durch den Freikolben momentan komprimierten Frischluft über das Einlasssystem unverzüglich vor Einlassende in Zylinder Zwei geschoben und dessen Luftdichte somit erhöht wird. Die Federkraft und komprimierte Frischluft im Einlasssystem drücken den Freikolben zurück in seine Ruheposition, d.h. bis zum abgasseitigen Anschlag. Nach 360°KW beginnt das Arbeitsspiel des Abgasimpulsladers von vorne, jedoch wechseln die beiden Motorzylinder bezogen auf den Abgasimpulslader ihre Funktion.

Im Versuch zeigte der Abgasimpulslader gutes Instationärverhalten bei niedrigen Motordrehzahlen (bis ca. 2000 U/min) und ebenso eine Steigerung des Luftaufwands. Bei höheren Drehzahlen (ab ca. 3000 U/min) erfolgte keine Ladedrucksteigerung mehr.

Der Abgasimpulslader weist einige thermodynamische und mechanische Nachteile auf, die seinen Wirkungsgrad und seine Funktion beeinträchtigen:

- Erhebliche Schadvolumina auf der Abgasseite (Kurzschlussverbindung zwischen Abgaszuströmkanal und Abgasabströmkanal), die sowohl den Abgasdruck vor dem Freikolben reduzieren als auch den Endkompressionsdruck im Einlasssystem

- Die relativ kurze Länge der Schirmung am Freikolben, die den Abgasstrom aus dem Abgasimpulslader in den Schalldämpfer freigibt, erlaubt nur einen kleinen Teil des Hubs des Freikolbens als Arbeitshub zur Entspannung der Motorabgase zu nutzen. Auch für die Verwertung der Energie des Abgasimpulses verhindert einerseits die hohe Masse des Freikolbens bezüglich der Gasmasse der Abgasdruckwelle eine nennenswerte Energieübertragung bei der Impulsübertragung von Abgas auf den Freikolben, so dass die Ladedruckerhöhung gering ausfällt, wie die Versuche bestätigten. Andererseits tritt durch die direkte Anbindung der Abgasauspuffleitung an die Expansionskammer der Abgasladepumpe zusätzlich ein Impulsverlust durch Überströmen ein.

- Die Schirmung des Freikolbens muss eine nicht unerhebliche Leckage in geschlossenem Zustand aufweisen, damit der Freikolben sich nach jedem Arbeitsspiel in seine Ruheposition zurück bewegen kann. Diese Leckageverluste stellen einen weiteren Druckverlust und damit Arbeitsverlust dar.

- Die Steuerung des Abgasabströmkanals über ein durch Abgasdruck und Massenträgheit gesteuertes Ventil stellt einerseits eine sehr ungenaue Einhaltung der Abgas-Steuerzeiten dar (Reibverhältnisse und Eigenschwingverhalten), andererseits ist es mit den vorgeschlagenen Ventilsystemen nicht möglich, annähernd das thermodynamisch ideale Abgassteuerdiagramm zu erreichen, in dem der volle Hub des Freikolbens als Arbeitshub mit geschlossenem Abgasabströmkanal genutzt wird und bei rücklaufendem Freikolben der Abgasabströmkanal vollends geöffnet ist. Die vorhandenen Massenträgheiten des Ventils und des Freikolbens verbieten das ideale Abgassteuerdiagramm, da die beschleunigten Massen einer Verzögerungsstrecke zur Richtungsumkehr bedürfen. Die notwendige Auslegung des abgasgetriebenen Ventilbetätigungsmechanismus auf einen bestimmten Abgasdruck hat zur Folge, dass sich die Abgas-Steuerzeiten unter Last-bzw. Drehzahländerungen des Motors kontraproduktiv ändern. Insbesondere spricht der abgasgetriebene Ventilbetätigungsmechanismus auf geringe Abgasdrücke (Niedriglast, Leerlauf) nicht an, womit auch der Abgasimpulslader keine Expansionsarbeit verrichtet, obwohl gerade im Teillastbereich bei mengengeregelten Ottomotoren relativ hohe Abgasenthalpien bezogen auf die spezifische Motorarbeit zur Verfügung stehen, da der Motor im gedrosselten Zustand ein geringes effektives Verdichtungsverhältnis und entsprechend niedriges Expansionsverhältnis aufweist. Es ist unmöglich, das Schließende des Ventils des Abströmkanals, das Druck- und Massenträgheit gesteuert ist, zeitgleich auf das Schließende der Motorauslassventils über die im Motorbetrieb vorkommenden Last- und Drehzahlspreizungen zu legen. Insbesondere ist bei den hier angeführten Schriften das Schließen des Ventils des Abströmkanals ausschließlich auf den Zeitpunkt des Entleerens der Abgasseite des Abgasimpulsladers bezogen und keine Korrelation zur Phasenlage bzw. dem Schließende des Motorauslassventils beschrieben.

- Freikolben und Feder (einschließlich der Luftfeder im Einlasstrakt) stellen einen harmonischen Oszillator dar, dessen Eigenfrequenz von den bewegten Massen (Kolben, Linearführungsstange und halbe Federmasse) und der Federrate abhängt. Gerät dieses System in die Nähe seiner Eigenfrequenz, stellen sich erhebliche Amplitudenausschläge ein, die den Freikolben mit hoher Beschleunigung an seine Anschläge im Zylinder prallen lassen können. Die absehbar hohen Massen der bewegten Bauteile, die mehrere 100 Gramm betragen dürften, und die notwendig schwachen Federkräfte, die auch bei geringeren Abgasdrücken (ca. 2 bar) eine Bewegung des Freikolbens zulassen müssen, legen nahe, dass die Eigenfrequenz des Systems bereits bei niedrigen Motorbetriebszahlen erreicht wird. Der am beschriebenen Versuchsmotor schnell abfallende Ladedruck des Abgasimpulsladers ab 2000 U/min lässt darauf schließen, dass die Eigenfrequenz hier bereits überschritten wurde und das System nicht mehr den vollen Arbeitshub vollzieht. Der Freikolben hat beim Überschreiten seiner Eigenfrequenz nicht genügend Zeit, in seine Ruhelage zurückzukehren. Ab ca. 3000 U/min baut sich am beschriebenen Versuchsmotor kein Ladedruck mehr auf. Vermutlich befindet sich der Freikolben etwa auf halben Kolbenweg in Ruhestellung.

- Das System des Freikolbens ist über wechselnde Abgasdrücke und sich ändernde Luftfederrückstellraten in seiner Eigenfrequenz und seinem Kolbenhub nicht eindeutig bestimmt, so dass Kollisionen des Freikolbens an seinen Endlagen im Zylinder zu erwarten sind.

- Die Abdichtung des Freikolbens zur Zylinderwand muss entweder berührungsfrei über einen Spalt geschehen, so dass sich auf Grund der großen Zylinderbohrung erhebliche Leckageströme von der Abgas- auf die Frischgasseite einstellen werden, oder es werden Dichtelemente z.B. Kolbenringe verwendet, die jedoch einer Schmierung bedürfen und erhöhte Reibung erzeugen werden.

- Der gesamte Abgasstrom wird durch den Abgasimpulslader geleitet und trägt damit zu einer hohen Wärmebelastung des Ladergehäuses und des Freikolbens bei.

Ein weiteres alternatives Konzept zur Leistungs- oder Wirkungsgradsteigerung von Verbrennungsmotoren ist die Nachschaltung eines Dampfprozesses (ORC). Dabei sind zur Nutzung von Abgasenthalpie bzw. Restwärme Dampfprozesse mit Kolben- bzw. Turbinenexpansionsmaschinen vorgesehen, die vorzugsweise mit niedrig siedenden organischen Arbeitsstoffen betrieben werden (ORC= Organic-Rankine-Cycle). Solche Prozesse entziehen dem Abgasstrom ausschließlich Wärme über Wärmetauscher. Auf Grund der geringen Temperaturhübe (physikalische Arbeitsstoffbeschränkung) bei einstufiger Prozeßführung sind die Wirkungsgrade selten höher als 15%. Die thermische Trägheit von Wärmetauschern und Leitungssystemen verhindert ein gutes Instationärverhalten, so dass diese Systeme nicht geeignet sind, mechanische Nutzleistung direkt in dynamisch betriebene Verbrennungsmotoren einzuspeisen. Insbesondere die hohen Systemkosten, die z. Zt. bei mehr als 3000€/kW liegen, verhindern eine Anwendung bei Kleinmotoren.

Alternativ kann auch eine thermoelektrische Energieumwandlung unter Nutzung des Seebeck-Effekts vorgesehen sein. Dieser Effekt beschreibt die elektrische Potentialdifferenz zweier Körper unterschiedlicher Temperatur auf Grund von differierenden Elektronengasdichten im Kristallgitter dieser Körper. Die Potentialdifferenz steigt mit dem Temperaturunterschied der Körper zueinander und kann zum Fließen eines elektrischen Stromes genutzt werden. Mit dem Abgas von Verbrennungsmotoren wird einer der Körper aufgeheizt, der andere wird vorzugsweise auf Atmosphärentemperatur gehalten. Das System kommt vollständig ohne bewegte Komponenten aus und stellt somit auch keine Arbeitsmaschine dar.

Der Erfindung liegt nunmehr die Aufgabe zu Grunde, eine alternative Ausgestaltung eines Verbrennungsmotors der oben genannten Art anzugeben, mit der auf besonders einfache und zuverlässige Weise eine besonders hohe spezifische Leistungsausbeute des Verbrennungsmotors und/oder ein besonders gering gehaltener spezifischer Brennstoffverbrauch ermöglicht ist.

Diese Aufgabe wird erfindungsgemäß durch einen Verbrennungsmotor der oben genannten Art gelöst, bei dem der Brennraum des oder jedes Zylinders jeweils einlassseitig über ein ansteuerbares Einlassventilsystem mit einem Gaseinlasssystem und auslassseitig über ein ansteuerbares Auslassventilsystem über eine Impulsweiche sowohl mit einer Auspuffanlage als auch mit der Primärseite einer Abgasladepumpe verbunden ist, wobei die Impulsweiche einen eingangsseitig mit dem Auslassventilsystem und ausgangsseitig mit der Primärseite der Abgasladepumpe verbundenen Hauptkanal und einen von diesem abzweigenden, ausgangsseitig mit der Auspuffanlage verbundenen Abgaskanal aufweist und den Impuls des Abgasstroms beim Öffnen des Auslassventilsystems möglichst vollkommen in die Primärseite der Abgasladepumpe oder in eine dieser vorgeschaltete Stichleitung zu leiten.

Für den Betrieb des Verbrennungsmotors ist dabei insbesondere ein Auslasstakt mit zwei Taktphasen vorgesehen. Erste und zweite Taktphase entsprechen in der Summe ihrer Zeitdauern bevorzugt etwa der Gesamtöffnungszeit des entsprechenden Motorauslassventils, wobei der Beginn der ersten Phase mit dem Öffnen des Motorauslassventils einhergeht und das Ende der zweiten Phase etwa mit dem Schließen des Motorauslassventils zusammenfällt, bzw. auch etwas verzögert stattfinden kann. Eine kurze erste Taktphase reduziert die Wandwärmeverluste im Auslasskanal und der Abgasladepumpe und ermöglicht mit einem frühzeitigen Druckabbau im Motorzylinder eine entsprechend geringe Ausschiebearbeit bzw. niedrigen Abgasgegendruck beim Ladungswechsel. Die Taktphasen entstehen insbesondere dadurch, dass durch eine geeignete Strömungsführung der Abgasdruckwelle beim Öffnen des Auslassventils der Impuls des Abgasstroms möglichst ganz oder zumindest teilweise auf die Primärseite der Abgasladepumpe übertragen wird. In dieser Phase soll zunächst ein Abfließen von Abgas weitgehend unterbunden werden. Der angestrebte Impulsübertrag aus der Abgasdruckwelle auf die Primärseite der Abgasladepumpe kann dabei erfolgen, indem das Abgas zumindest teilweise unmittelbar in die Abgasladepumpe gelangt; besonders bevorzugt ist aber ein mittelbarer Impulsübertrag, bei dem die aus dem Zylinder abströmende Abgasdruckwelle ihren Impuls teilweise oder möglichst vollständig auf ein sich im und/oder vor dem Primärvolumen der Abgasladepumpe bereits befindliches Gaspolster überträgt. Anschließend folgt die zweite Taktphase des Auslasstakts, in der das Abgas zur Auspuffanlage strömt.

Die Erfindung geht dabei von der Überlegung aus, dass als besonders geeigneter Ansatzpunkt für eine Wirkungsgrad- und/oder Leistungssteigerung des Verbrennungsmotors die Nutzung der im aus dem Zylinder abströmenden Abgas noch mitgeführten Restenthalpie gewählt werden sollte, da betriebsbedingt das Abgas aus dem jeweiligen Zylinder mit einem vergleichsweisen hohen Restdruck abströmt, der zur zusätzlichen Bereitstellung von Nutzleistung herangezogen werden kann, bevor das Abgas an die auf Umgebungsdruck befindliche Umwelt abgegeben wird.

Im Fokus der Anwendungen für die Abgasladepumpe stehen insbesondere Ein- und Zweizylinderverbrennungsmotoren, die relativ kleine Einzelzylindervolumina von ca. 50-250 ccm aufweisen. Für diese Motorengattungen existiert bisher kein wirtschaftlich nutzbares System zur Umwandlung von (verlorener) Abgasenergie in mechanische (Antriebs-) Energie. Die Abgasladepumpe sollte bevorzugt mit folgenden Randbedingungen dieser Motorengattungen effizient betreibbar sein, bzw. die Eigenschaften aufweisen:

- Für Motordrehzahlen bis ca. 10000U/min (Zweiradmotoren)
- Auch hohe Schwankungen des Abgasmassenstroms (Einzylindermotoren) effizient umwandeln

- Der Förderstrom des Frischgases sollte etwa proportional zu Last und Drehzahl erfolgen
- Geringen Abgasgegendruck im Ausschiebetakt und Ladungswechsel hervorrufen
- Grundsätzliche Trennung von Abgas- und Frischgasleitungen
- Gutes Instationärverhalten (Fahrzeuganwendung)
- Geringe Eigen(reib)verluste
- Gutes akustisches Verhalten (Zweiradmotoren)
- Geringe System kosten
- Wartungsarmut
- Thermisch möglichst geringer Belastung unterliegen
- Eignung für sowohl für Otto- und Dieselmotoren, als auch Zwei- und Viertaktverfahren

Um den Ansprüchen an die Abgasenthalpieschwankungen, gutem Instationärverhalten, kleine Zylinderhubräume und zur Motordrehzahl proportionalem Förderstrom zu genügen, wird die Abgasladepumpe vorzugsweise als Pumpe mit oszillierendem Pumpenkörper ausgelegt, der synchron zur Abgasdruckwelle im Auslasskanal des mit ihr verbundenen Motorzylinders ein Arbeitsspiel leistet.

Hohe Betriebsfrequenz der Abgasladepumpe für hochdrehende Motoren, gutes Instationärverhalten, die Trennung der Abgas- und Frischgasleitungen, geringe Reibverluste und Wartungsarmut werden erreicht, indem der Pumpenkörper besonders bevorzugt als elastisch verformbare, vorzugsweise gewichtsminimierte Trennwand zwischen Abgas- und einer Frischgasseite der Abgasladepumpe ausgelegt wird. Auch ermöglicht eine solche gewichtsminimierte Trennwand eine hohe Energieübertragung beim Impulsaustausch vom Gas auf die Trennwand, da theoretisch die maximale Energieübertragung bei identischer Masse von Gas bzw. Trennwand stattfindet. Vorzugsweise wird die geleistete Expansionsarbeit auf der Abgasseite der Abgasladepumpe über die Trennwand in eine Kompressionsarbeit eines Frischgasvolumens umgewandelt, der andern Orts arbeitsleistend wieder entspannt werden kann. Die Bewegungsabläufe der Trennwand lassen sich jedoch auch als mechanische Energie nutzen bzw. über einen Generator in elektrische Energie wandeln.

Eine thermisch reduzierte Belastung der Abgasladepumpe wird verfahrensbeding erreicht, indem das Abgas ausschließlich durch einen Kanal in die Primärseite der Abgasladepumpe ein- und nachfolgend wieder ausströmt. Im Gegensatz zum Abgasimpulslader, der von der kompletten Abgasmasse durchströmt wird, findet in der Abgasladepumpe im Arbeitsspiel einerseits nur ein "Verschiebemassestrom" mit wesentlich geringeren Strömungsgeschwindigkeiten (kleinere Wärmeübergangskoeffizienten) statt, und andererseits wird das aus dem Motorzylinder in der zweiten Taktphase ausgeschobene Abgas nicht durch die Abgasladepumpe geleitet.

Durch die Aufteilung des Auslasstakts in zumindest zwei Teilphasen ist somit erreicht, dass in der vorzugsweise zeitlich vergleichsweise kurz gehaltenen ersten Teilphase die gewünschte Nutzung der Abgasenthalpie vorgenommen werden kann, wobei in der zweiten, im Vergleich zur ersten vorzugsweise lang gehaltenen Teilphase die nachfolgenden Gaswechsel- und Spülvorgänge auf dem günstigen Druckniveau eines Saugmotors erfolgen können. Ein besonders hoher Wirkungsgrad bei mechanisch gering gehaltenem Aufwand ist dabei durch die ganz besonders bevorzugte Auslegung erreicht, bei der in der zweiten Teilphase das nunmehr zum Teil entspannte Abgas aus der Primärseite der Abgasladepumpe gemeinsam mit dem Rest-Abgas aus dem Brennraum ab- und der Auspuffanlage zugeführt wird. Das der Primärseite der Abgasladepumpe zugeführte Abgas wird somit in dieser Phase wieder zurückgeführt, so dass die Abgasladepumpe durch einen Stichkanal an- und später wieder abgeströmt, nicht aber durchströmt wird.

Die dem Abgas in der Abgasladepumpe entzogene Enthalpie kann auf beliebige Weise in im Gesamtsystem des Verbrennungsmotors nutzbare Wirkleistung oder Energie umgesetzt werden, beispielsweise über hydraulische, elektrische oder ähnliche Systeme. Eine besonders günstige und vor allem flexible Nutzung der dem Abgas mittels der Abgasladepumpe entzogenen Enthalpie ist aber möglich, indem in besonders vorteilhafter Ausgestaltung in der Abgasladepumpe die Enthalpie des dieser primärseitig zugeführten Abgases ganz oder teilweise auf einen ihr sekundärseitig zugeführten Frischgasstrom übertragen wird, oder die in der Abgasladepumpe auf der Primärseite in Expansionsarbeit umgewandelte Enthalpie des Abgases ganz oder teilweise auf der Sekundärseite in Kompressionsarbeit eines zugeführten Frischgasstrom umgewandelt wird. Dabei wird vorteilhafterweise in der Abgasladepumpe der Enthalpieentzug aus dem Abgas in Kompressionsarbeit eines vom Abgasstrom hermetisch getrennten Kaltgasstroms umgewandelt. Ein komprimierter Frischgasstrom besitzt hohe Energiedichte bei geringen bewegten Massen, was dessen Eignung für hohe Arbeitsfrequenzen der Abgasladepumpe (=hohe Motordrehzahlen) unterstreicht.

Der Kaltgasstrom und/oder Frischgasstrom, der in der Abgasladepumpe durch die dort verrichtete Kompressionsarbeit verdichtet wurde, kann in einer vorteilhaften Ausgestaltung in einer vom Frischgasluftstrom der Wärmekraftmaschine oder des Verbrennungsmotors unabhängigen Ausführung einer separaten Expansionsmaschine wie beispielsweise einem Flügelzellenexpander zugeführt und dort arbeitsleistend entspannt werden. Über den in der Abgasladepumpe komprimierten Frischgas- oder Kaltgasluftstrom ist in dieser Variante die Bereitstellung eines vom Motor unabhängigen Arbeitsmediums ermöglicht, das auf flexible Weise anderwärtig als Arbeitsmedium genutzt werden kann. Beispielsweise ist denkbar, dieses Arbeitsmedium zum Antrieb eines zusätzlichen Aggregats zu nutzen, oder es kann auch eine Ankopplung der Expansionsmaschine an die Motor- oder Kurbelwelle des Verbrennungsmotors oder der Wärmekraftmaschine vorgesehen sein, so dass unmittelbar eine nutzbare Zusatzleistung des Verbrennungsmotors generiert wird.

In ganz besonders vorteilhafter Ausgestaltung ist aber vorgesehen, den Enthalpieentzug aus dem Abgas in der Abgasladepumpe zur Verrichtung von Kompressionsarbeit für den dem Brennraum des jeweiligen Zylinders zuströmenden Frischgasstrom zu verwenden. Damit wird die Abgasenthalpie unmittelbar zur Aufladung des Frischgasstroms genutzt. Um dies synchronisiert und angepasst an die Taktfolge im Verbrennungsmotor auf besonders günstige Weise umzusetzen, wird das zur Einspeisung in den Brennraum des Verbrennungsmotors vorgesehene Frischgas vorteilhafterweise zumindest teilweise der Sekundärseite der Abgasladepumpe zugeführt und dort in der genannten Weise während der ersten Teilphase des Auslasstakts durch das der Abgasladepumpe primärseitig zugeführte Abgas komprimiert und vorgespannt. Dieses komprimierte und vorgespannte Frischgas wird sodann vorteilhafterweise einem der Sekundärseite der Abgasladepumpe gasseitig nachgeschalteten Zwischenspeicher zugeführt und dort zur Einspeisung in den Brennraum des Zylinders bereitgehalten. Für das Zwischenspeichern kann dabei ein ohnehin vorhandenes Einlasskanalsystem des jeweiligen Zylinders verwendet werden, über das das Frischgas dem jeweiligen Brennraum zugeleitet wird. Die Einspeicherung des in der Abgasladepumpe vorkomprimierten und vorgespannten Frischgases erfolgt dabei vorzugsweise so lange, bis die Einlasssteuerung des jeweiligen Zylinders den jeweiligen Einlasskanal freigibt und das Frischgas in den Brennraum einströmen kann. Durch diese Ausgestaltung, bei der der in der Abgasladepumpe vorgespannte Frischgasstrom zur vollständigen oder teilweisen Versorgung der Wärmekraftmaschine mit Verbrennungsluft dient, ist erreicht, dass das in der Abgasladepumpe vorgespannte Frischgas unmittelbar über ein positives Spülgefälle Kolben- oder Expansionsarbeit direkt an der Wärmekraftmaschine leisten kann.

Durch die anspruchsgemäße Ausgestaltung des Abgassystems ist erreicht, dass mittels der Impulsweiche, die bevorzugt in funktionaler Hinsicht im Wesentlichen eine geeignet gewählte Rohrleitungsverzweigung darstellt, während der ersten Phase des Auslasstakts eine gezielte Einleitung des Impulses der Abgasdruckwelle in die Abgasladepumpe erfolgen kann. Die Impulsweiche hat dabei die Aufgabe, den Impuls des Abgasstroms beim Öffnen des Auslassventils möglichst vollkommen in die Primärseite der Abgasladepumpe oder in eine dieser vorgeschaltete Stichleitung zu leiten, so dass in dieser ersten Taktphase des Auslasstakts der Impuls der aus dem Zylinder abströmenden Abgasdruckwelle möglichst ganz oder zumindest teilweise auf die Primärseite der Abgasladepumpe übertragen wird. In dieser Phase soll zunächst ein Abfließen von Abgas in den Abgaskanal, was einen Impulsverlust bedeuten würde, weitgehend unterbunden werden. Der angestrebte Impulsübertrag aus der Abgasdruckwelle auf die Primärseite der Abgasladepumpe kann dabei erfolgen, indem das Abgas zumindest teilweise unmittelbar in die Abgasladepumpe gelangt; besonders bevorzugt ist aber ein mittelbarer Impulsübertrag, bei dem die aus dem Zylinder abströmende Abgasdruckwelle ihren Impuls teilweise oder möglichst vollständig auf ein in und/oder vor der Primärseite der Abgasladepumpe oder in einer ihr vorgeschalteten Stichleitung bereits befindliches Gaspolster überträgt.

In besonders vorteilhafter Ausgestaltung weist die Impulsweiche dabei einen eingangsseitig mit dem Auslassventilsystem und ausgangsseitig mit der Primärseite der Abgasladepumpe verbundenen Hauptkanal und einen von diesem abzweigenden, ausgangsseitig mit der Auspuffanlage verbundenen Abgaskanal auf. Die den ausgangsseitigen Teil des Hauptkanals umfassende, die Impulsweiche mit der Primärseite der Abgasladepumpe verbindende Stichleitung weist dabei bevorzugt ein Volumen von mehr als dem 1-fachen, vorzugsweise von mehr als dem 1,3-fachen, des Hubraums des oder der Zylinder auf.

Die Impulsweiche kann bevorzugt als T-Stück-artige, Y-Stück-artige oder Strahlpumpen-artige Rohrverzweigung ausgeführt sein, deren Hauptkanal den mit dem Auslassventilsystem verbundenen Einströmbereich für das Abgas möglichst geradlinig oder leicht gekrümmt mit der Stichleitung zur Abgasladepumpe verbindet.

In einer ersten besonders bevorzugten Ausführungsform ist die Impulsweiche somit als T-Stück-artige oder Strahlpumpen-artige Rohrverzweigung ausgeführt, deren Hauptkanal den mit dem Auslassventilsystem verbundenen Einströmbereich für das Abgas möglichst geradlinig mit der Primärseite der Abgasladepumpe bzw. mit der dieser vorgeschalteten Stichleitung verbindet. In einer alternativen besonders bevorzugten Ausführungsform weist die Impulsweiche einen gekrümmten Hauptkanal auf, der den mit dem Auslassventilsystem verbundenen Einströmbereich für das Abgas mit der Primärseite der Abgasladepumpe bzw. mit der dieser vorgeschalteten Stichleitung verbindet, wobei der ausgangsseitig mit der Auspuffanlage verbundene Abgaskanal auf der Innenseite der Krümmung des Hauptkanals von diesem abzweigt.

In besonders vorteilhafter Ausgestaltung ist der Verbrennungsmotor für eine Nutzung der im der Abgasladepumpe zugeführten Abgas enthalten Abgasenthalpie zur Verrichtung von Kompressionsarbeit für einen Frischgasluftstrom ausgeführt. Dazu ist vorteilhafterweise die Abgasladepumpe sekundärseitig an eine Frischgasdruckleitung und an einen Frischgassaugkanal angeschlossen, wobei durch den Frischgassaugkanal die Sekundärseite der Abgasladepumpe mit Frischgas befüllbar ist, und wobei die Frischgasdruckleitung zur Weiterleitung und/oder Zwischenspeicherung des in der Abgasladepumpe komprimierten Frischgases vorgesehen und ausgelegt ist. Die Frischgasdruckleitung ist in einer ersten vorteilhaften Weiterbildung abströmseitig von der Abgasladepumpe mit einer Expansionsmaschine verbunden. In einer zweiten vorteilhaften Weiterbildung ist die Frischgasleitung abströmseitig von der Abgasladepumpe mit einem Zwischenspeicher für das Frischgas verbunden, der seinerseits ausgangsseitig mit dem Gaseinlasssystem des jeweiligen Zylinders verbunden ist. Damit ist eine Nutzung des in der Abgasladepumpe komprimierten oder vorgespannten Frischgases als Verbrennungsluft für den jeweiligen Zylinder ermöglicht, so dass die dem Abgas in der Abgasladepumpe entzogene Enthalpie unmittelbar über ein positives Spülgefälle zur Nutzung von Kolben- oder Expansionsarbeit direkt am Verbrennungsmotor herangezogen werden kann.

Die Abgasladepumpe, die zur Nutzung in einem derartig ausgestalteten Verbrennungsmotor vorgesehen ist, wird in ihrer Ausführung als eigenständig erfinderische Leistung angesehen. Erfindungsgemäß umfasst die Abgasladepumpe ein Druckgehäuse, dessen Innenvolumen über eine Anzahl von elastisch verformbaren Trenneinheiten in eine Mehrzahl von gasseitig voneinander getrennten Teilvolumina aufgeteilt ist, wobei die oder jede Trenneinheit derart mit einer Vorspannkraft beaufschlagt ist, dass im drucklosen Zustand das zur Verbindung mit dem Abgassystem des Verbrennungsmotors vorgesehene Teilvolumen im Rahmen der elastischen Verformbarkeit der oder jeder Trenneinheit einen Minimalwert aufweist.

Durch diese Ausgestaltung ist mit besonders einfachen Mitteln und auf besonders zuverlässige Weise erreicht, dass die Abgasenthalpie zuverlässig in Kompressionsarbeit für den zugeführten Frischgasluftstrom angezogen werden kann. Durch die Aufteilung des Druckgehäuses in vorzugsweise zwei Teilvolumina ist erreicht, dass die Expansion des primärseitigen Teilvolumens, in das das unter Druck stehende Abgas geführt wird, unmittelbar und nahezu verlustfrei zu einer entsprechenden Kompression des zweiten Teilvolumen führt, da sich auf Grund des gemeinsamen Druckgehäuses die Summe der Teilvolumina nicht ändern kann. Die Expansion des Abgases im ersten Teilvolumen führt somit unmittelbar und vollständig zu einer entsprechenden Kompression des sich im zweiten Teilvolumen befindlichen Frischgases. Durch die Beaufschlagung der Trenneinheit mit einer Vorspannkraft ist dabei sichergestellt, dass im drucklosen Zustand das erste, für die Aufnahme des Abgases vorgesehene Teilvolumen minimal, im Idealfall nahezu bei Null gehalten werden kann, so dass Totvolumina zumindest in der Abgasladepumpe besonders gering gehalten werden können.

Die Trenneinheit der Abgasladepumpe kann dabei grundsätzlich in verschiedenen Varianten unter Einhaltung der genannten Randbedingungen ausgeführt sein. Beispielsweise könnte die Trenneinheit als Faltenbalg oder als im Druckgehäuse geführter Kolben ausgeführt sein, wobei jeweils ein Federelement zur Vorspannung und Rückstellung vorgesehen sein könnte. Die Ausgestaltung als Faltenbalg bietet unter diesen Varianten den Vorteil gegenüber dem Kolben, dass Undichtigkeiten und ein gasseitiges Überströmen zwischen den Teilvolumina sicher ausgeschlossen werden können. Im Hinblick auf eine besonders einfach gehaltene und robuste Ausführung ist jedoch in besonders vorteilhafter Ausgestaltung vorgesehen, dass die Abgasladepumpe als Membranpumpe ausgeführt ist. Die Trenneinheit stellt dabei die Membran der Membranpumpe dar.

Die mit der Erfindung erzielten Vorteile bestehen insbesondere darin, dass durch die auf die erste Teilphase des Auslasstakts beschränkte Einspeisung des aus dem Zylinder abströmenden Abgases als Primär- oder Antriebsmedium in die Abgasladepumpe und die anschließend vorgesehene Ableitung des restlichen Abgases ebenso wie des auf der Primärseite der Abgasladepumpe zumindest teilweise entspannten Abgases in die Auspuffanlage eine weitreichende und zuverlässige Nutzung des Druckgefälles der Abgasenthalpie zur Wirkungsgrad- oder Leistungssteigerung des Verbrennungsmotors ermöglicht ist. Die schnelle Entspannung mit Beginn der zweiten Taktphase ermöglicht, ähnlich einem Saugmotor, geringe Gaswechselverluste. Dies ist mit apparativ gering gehaltenem Aufwand und mit hoher Zuverlässigkeit möglich.

Des Weiteren weist ein nach dem genannten Konzept ausgelegter Verbrennungsmotor folgende vorteilhaften Eigenschaften auf:

- Es können diskontinuierliche Abgasenthalpieströme, wie sie beispielsweise bei Einzylindermotoren auftreten, zuverlässig in Kompressionsarbeit eines Kaltgasstroms umgewandelt werden.
- Das Konzept ist insbesondere auch für Kleinmotoren (beispielsweise mit Hubräumen $\leq$ 250ccm) und entsprechende geringe Abgasströme geeignet.
- Es ist ein sehr gutes Instationärverhalten, gerade auch in Teillastbereichen, (z.B. für Fahrzeugmotoren) erreichbar.
- Die Fördercharakteristik des Kaltgasstroms verläuft etwa proportional zur Motordrehzahl. - Es ist eine hermetische Trennung von Abgas und Frischgas möglich.
- Es wird lediglich ein vergleichsweise geringer Abgasgegendruck hervorgerufen.
- Es wird lediglich eine geringe Eigenverlustleistung erzeugt.
- Die Systemkosten sind aufgrund der einfachen Bauweise und des an sich passiv auslegbaren Steuersystems vergleichsweise gering.
- Die Anbindbarkeit an bestehende Motorenkonzepte ist gegeben.
- Es ist ein gutes akustisches Verhalten erreichbar.
- Das Konzept ist sowohl für Otto- und Dieselmotoren als auch für im Vier- bzw. Zweitaktarbeitsverfahren arbeitende Verbrennungskraftmaschinen anwendbar.

Ein solchermaßen ausgerüsteter Verbrennungsmotor kann insbesondere als Hubraum- kleiner Einzylinder-Verbrennungsmotor ausgelegt sein, bei dem ein hoher Wirkungsgrad erreichbar ist. Solche Motoren, die in der Regel als frei saugende Viertakt-Ottomotoren ausgeführt sind, werden weltweit in großen Stückzahlen beispielsweise für Zweiräder (50-250ccm Hubraum), Industriemotoren (auch Dieselmotoren) für Stromerzeuger, Pumpen etc. und (Mini)-Blockheizkraftwerke hergestellt. Auch für PKW-Motoren kann die Abgasladepumpe als alleiniges Aufladeaggregat eingesetzt werden bzw. mit einem Turbolader in Reihe geschaltet als zweistufiger Verdichter fungieren. Die Abgasladepumpe bildet hier vorteilhafterweise die erste Stufe, der ein Turbolader sowohl turbinenseitig als auch verdichterseitig nachgeschaltet ist.

Die mit der Erfindung erzielten Vorteile bestehen weiterhin insbesondere darin, dass durch die gezielte Nutzung der in der Abgasdruckwelle enthaltenen Enthalpie, insbesondere durch gezielte Weiterleitung des Impulses der Abgasdruckwelle in die Primärseite einer Abgasladepumpe mittels der Impulsweiche, eine zusätzliche Kompression des Frischgasstroms erreicht und damit eine Nutzung des Impulses zur Wirkungsgrad- und/oder Leistungssteigerung ermöglicht wird. Insbesondere wird ermöglicht, die in diskontinuierlichen Druckimpulsen von Gasen enthaltene kinetische Energie effizienzsteigernd durch eine Abgasladepumpe mittelbar bzw. unmittelbar in mechanisch nutzbare Energie umzuwandeln. Insbesondere können auf diese Weise pulsierende Abgasströme, wie sie beispielsweise in Auslasssystemen von Verbrennungsmotoren vorkommen, oder Dampfströme, die aus Dampfprozessen oder Dampferzeugungsanlagen stammen oder ganz allgemein in Wärmekraftmaschinen vorkommen, genutzt werden.

Ein Ausführungsbeispiel der Erfindung wird anhand einer Zeichnung näher erläutert. Darin zeigen:

Fig. 1          schematisch einen Verbrennungsmotor,

Fig. 2a-2e     jeweils eine Impulsweiche für den Verbrennungsmotor gem. FIG. 1 im Längsschnitt,

Fig. 3,4       jeweils schematisch eine alternative Ausführungsform eines Verbrennungsmotors,

Fig. 5          schematisch einen Zweitakt-Verbrennungsmotor,

Fig. 6          eine Abgasladepumpe im Querschnitt, und

Fig. 7 - 9     jeweils eine alternative Ausführung einer Abgasladepumpe im Querschnitt.

Gleiche Teile sind in allen Figuren mit denselben Bezugzeichen versehen.

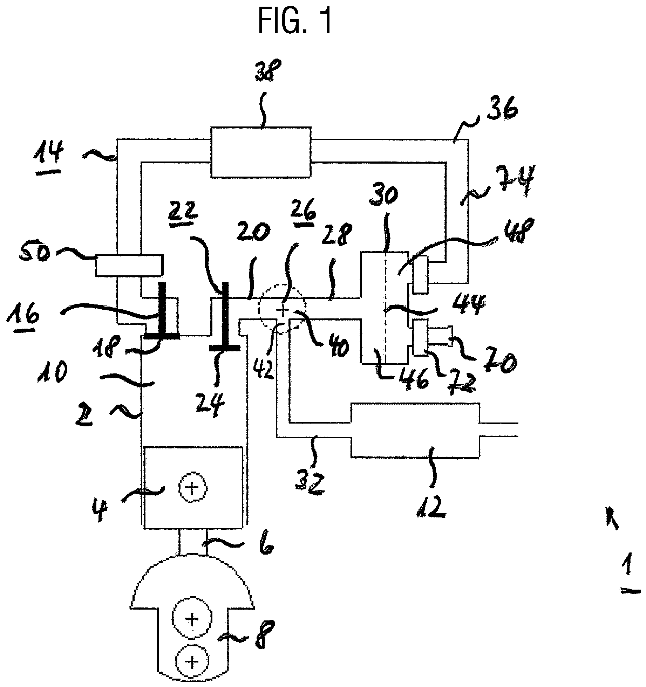

Der in Fig. 1 schematisch dargestellte Verbrennungsmotor 1 ist nach dem 4-TaktVerfahren ausgelegt. Er umfasst eine Anzahl von Zylindern 2, von denen in Fig. 1 lediglich einer dargestellt ist, und in denen jeweils ein Arbeitskolben 4 geführt ist. Der Arbeitskolben 4 wirkt über ein Pleuel 6 auf eine Kurbelwelle 8. Je nach Auslegung und Bauart des Verbrennungsmotors 1 können dabei auch der oder die Arbeitskolben 4 mehrerer oder aller Zylinder 2 auf eine gemeinsame Kurbelwelle 8 wirken.

Innerhalb des Zylinders 2 befindet sich in herkömmlicher Bauweise der Brennraum 10, in dem im Arbeitstakt des Zylinders 2 ein komprimiertes Brennstoff-Luft-Gemisch zur Verbrennung gebracht wird. In Reaktion hierauf führt der im Zylinder 2 verschiebbar angeordnete Arbeitskolben 4 einen Arbeitshub aus, wobei er die Kurbelwelle 8 arbeitsleistend antreibt. Nach der Vollendung des Arbeitshubs, also nach vollständiger Expansion des verbrannten Arbeitsgases im Zylinder 2 und bei Erreichen des so genannten "unteren Totpunkts" (UT), wird das verbrannte Arbeitsgas als Abgas während eines Auslasstakts des Zylinders 2 einer auslassseitig an diesen angeschlossenen Auspuffanlage 12 zugeführt.

Für die zum Betrieb des Zylinders 2 erforderlichen Gaswechsel ist der Brennraum 10 gaseinlassseitig mit einem Gaseinlasssystem 14 und auslassseitig mit der Auspuffanlage 12 verbunden. Zur Steuerung der Gaswechsel im Brennraum 10 ist dabei der Brennraum 10 einerseits gegenüber dem Gaseinlasssystem 14 mittels eines Einlassventilsystems 16 absperrbar, das im Ausführungsbeispiel gem. Fig. 1 als Einlassventil 18 ausgeführt ist. Andererseits ist der Brennraum 10 gegenüber dem zur Auspuffanlage 12 führenden Abgasstrang 20 mittels eines Auslassventilsystems 22 absperrbar, das im Ausführungsbeispiel gem. Fig. 1 als Auslassventil 24 ausgeführt ist.

Der Verbrennungsmotor 1 ist gezielt für eine besonders hohe spezifische Leistungsausbeute und/oder einen besonders hohen Wirkungsgrad und damit geringen spezifischen Kraftstoffverbrauch ausgelegt. Dazu ist vorgesehen, dem aus dem Brennraum 10 während des Auslasstakts des jeweiligen Zylinders 2 abströmenden heißen Abgas zumindest einen Teil der ansonsten eigentlich ungenutzten Abgasenthalpie zu entziehen, um diese in den Wirkungsgrad steigernder Weise in mechanische Antriebsenergie und/oder Erhöhung der Frischgasluftdichte im Sinne einer Aufladung umzuwandeln. Dies soll erreicht werden, indem der während des Auslasstakts aus dem Brennraum 10 abströmenden Abgasdruckwelle in möglichst weitgehendem Umfang Impuls entzogen und zur Vorverdichtung des dem Brennraum 10 zuströmenden Frischgases auf dieses übertragen wird.

Um dies zu ermöglichen, ist der Abgasstrang 20 verzweigt ausgeführt. Dazu ist in den Abgasstrang 20 eine Impulsweiche 26 geschaltet, die eingangsseitig mit dem Auslassventilsystem 22 und ausgangsseitig einerseits über eine Stichleitung 28 mit der Primärseite einer Abgasladepumpe 30 und andererseits mit einer zur Auspuffanlage 12 führenden Abgasleitung 32 verbunden ist. Der Brennraum 10 ist somit auslassseitig über das Auslassventilsystem 22 und über die Impulsweiche 26 sowohl mit der Auspuffanlage 12 als auch mit der Primärseite der Abgasladepumpe 30 verbunden.

Durch diese Schaltung ist im Ausführungsbeispiel gem. Fig. 1 die Nutzung der in der Abgasladepumpe 30 dem Abgas entzogenen Enthalpie zur Kompression und damit Vorspannung eines der Abgasladepumpe 30 sekundärseitig zugeführten Kaltgasstroms, nämlich in diesem Ausführungsbeispiel dem zur Einspeisung in den Brennraum 10 vorgesehenen Frischgasluftstrom, vorgesehen. Dementsprechend ist im Ausführungsbeispiel gem. Fig. 1 die Abgasladepumpe 30 sekundärseitig in eine Frischgasleitung 36 geschaltet, die über einen Ladeluftkühler 38 geführt ist und ausgangsseitig über das Einlassventilsystem 16 mit dem Brennraum 10 des Zylinders 2 absperrbar verbunden ist.

Im Ausführungsbeispiel gem. Fig.1 ist der Zylinder 2 des Verbrennungsmotors 1 in dem Moment gezeigt, in dem der Arbeitskolben 4 sich im unteren Totpunkt (UT) befindet und der Auslasstakt des Zylinders 2 beginnt. Das Auslassventil 24 hat begonnen, sich zu öffnen. Beim Öffnen des Auslassventils 24 entweicht das noch unter Restdruck stehende Abgas aus dem Brennraum 10 des Zylinders 2 in den Auslasskanal oder Abgasstrang 20. Da der Restdruck des Abgases im Zylinder 2 in der Regel zwischen 2-8 bar liegt und im Auslasskanal mittlere Abgasgegendrücke von etwa 1,1-1,6 bar vorherrschen, strömt das Abgas auf Grund des überkritischen Druckverhältnisses mit Schallgeschwindigkeit am Auslassventil 24 vorbei. Wegen der hohen Abgastemperaturen, die in der Praxis zwischen 350-1150°C liegen, erreicht die Schallgeschwindigkeit des Abgases Werte bis zu 1000 m/s. Entsprechend hoch ist der Impuls (p=m·v) der Abgasdruckwelle, der im vorliegenden System gezielt wirkungsgrad- und/oder leistungssteigernd genutzt werden soll.

Je nach Motordrehzahl und Gestaltung des Motorventiltriebs beträgt die Laufzeit der energiereichen primären Abgasdruckwelle ca. 10-50° Kurbelwelle. Die Abgasdruckwelle strömt dabei durch die Impulsweiche 26, die vorteilhafterweise eine Rohrverzweigung darstellt. Die Impulsweiche 26 weist dabei einen eingangsseitig mit dem Auslassventilsystem 22 und ausgangsseitig mit der Primärseite der Abgasladepumpe 30 verbundenen Hauptkanal 40 auf, von dem ein ausgangsseitig in die Abgasleitung 32 mündender und über diese mit der Auspuffanlage 12 verbundener Abgaskanal 42 abzweigt. Der Hauptkanal 40 mündet somit in die zur Abgasladepumpe 30 führende Stichleitung 28, wohingegen der Abgaskanal 42 zur Auspuffanlage 12 läuft, über die das Abgas ins Freie gelangt.

Die Impulsweiche 26 hat die Aufgabe, den Impuls des Abgasstroms beim Öffnen des Auslassventils 24 möglichst vollkommen in die Stichleitung 28 zu leiten, so dass in einer ersten Taktphase des Auslasstakts der Impuls der aus dem Zylinder 2 abströmenden Abgasdruckwelle möglichst ganz oder zumindest teilweise auf die Primärseite der Abgasladepumpe 30 übertragen wird. In dieser Phase soll zunächst ein Abfließen von Abgas in den Abgaskanal 42, was einen Impulsverlust bedeuten würde, weitgehend unterbunden werden. Der angestrebte Impulsübertrag aus der Abgasdruckwelle auf die Primärseite der Abgasladepumpe 30 kann dabei erfolgen, indem das Abgas zumindest teilweise unmittelbar in die Abgasladepumpe 30 gelangt; besonders bevorzugt ist aber ein mittelbarer Impulsübertrag, bei dem die aus dem Zylinder 2 abströmende Abgasdruckwelle ihren Impuls teilweise oder möglichst vollständig auf die in der Stichleitung 28 bereits befindliche Gassäule überträgt, die ihn ihrerseits in die Abgasladepumpe 30 weiterleitet.

In der Abgasladepumpe 30 trifft der (unmittelbar oder mittelbar eingeleitete) Impuls des Abgasstroms auf die dort zwischen Primär- und Sekundärseite vorhandene, als Trenneinheit 44 vorgesehene elastische Zwischenwand 44 und verformt diese durch Impulsübertragung. Die bewegte Masse der elastischen Zwischenwand 44 ist bevorzugt vergleichbar zur Masse der beschleunigten Abgassäule gewählt, um bei der Impulsübertragung ($m_{gas}·v_{gas}=m_{wand}·v_{wand}$) möglichst viel kinetische Energie $\left(\frac{1}{2}\,m_{wand}·v_{wand}^2\right)$ auf die elastische Zwischenwand 44 zu übertragen. Das in der Primärseite der Abgasladepumpe 30 vorhandene Gas expandiert somit im sich vergrößernden Primärgasvolumen 46 der Abgasladepumpe 30. Gleichzeitig wird auf der gegenüberliegenden Seite der elastischen Zwischenwand 44 Frischgas im sich verkleinernden, in die Frischgasleitung 36 geschalteten Sekundär- oder Frischgasvolumen 48 der Abgasladepumpe 30 komprimiert. In der Abgasladepumpe 30 wird somit die auf der Primärseite in Expansionsarbeit umgewandelte Enthalpie des Abgases in Kompressionsenergie des in der Frischgasleitung 36 auf der Sekundärseite geführten Frischgases umgewandelt.

Dazu kann die Abgasladepumpe 30 geeignet ausgeführt sein, beispielsweise als Faltenbalg-Pumpe oder dergleichen. Im Ausführungsbeispiel ist aber die als besonders vorteilhaft und eigenständig erfinderisch angesehene Ausführung der Abgasladepumpe 30 als Membranpumpe mit elastischer Zwischenwand 44 als Membran vorgesehen. In dieser entspannt sich das Abgas durch Verformung der Membran, die die beiden Volumina von Abgas und Frischgas gasdicht voneinander trennt. Im druckfreien Zustand nimmt das Volumen auf der Abgas- oder Primärseite der Abgasladepumpe 30 sein Minimum ein, und das Volumen auf der Frischgasseite entsprechend sein Maximum. Die äußerst geringe Masse der Membran ermöglicht eine sehr schnelle Volumenänderung in der Abgasladepumpe 30 und dem entsprechend eine unverzügliche Entspannung des Abgases innerhalb weniger Grad Kurbelwelle, so dass die für die Umwandlung der auf der Primärseite in Expansionsarbeit umgewandelte Enthalpie des Abgases in Kompressionsenergie des in der Frischgasleitung 36 auf der Sekundärseite geführten Frischgases vorgesehene erste Taktphase des Auslasstakts entsprechend kurz gehalten werden kann.

Anschließend folgt die zweite Taktphase des Auslasstakts, in der das Abgas zur Auspuffanlage 12 strömt. Nach erfolgter Deformation der elastischen Zwischenwand 44 wird diese durch eine Rückstellkraft wieder in ihre Ausgangslage bewegt und schiebt das Abgas bzw. die in der Stichleitung 28 befindliche Gassäule über die Stichleitung 28 zur Impulsweiche 26 zurück, so dass das Abgas von dort in den Abgaskanal 42 gelangt. Ebenso schiebt der Kolben 4 das im Zylinder 2 noch vorhandene Abgas aus diesem über den Abgasstrang 20 und die Impulsweiche 26 in den Abgaskanal 42. Das Frischgas wird hingegen während der Kompression aus der Abgasladepumpe 30 durch ein dort vorgesehenes Rückschlagventil in die als Druckspeicherleitung vorgesehene und ausgestaltete Frischgasleitung 36 gedrückt, in der es verweilt, bis das Einlassventil 18 und ein eventuell vorhandenes Zusatzventil 50 sich öffnen. Die Frischgasleitung 36 kann somit als Zwischenspeicher angesehen werden, dem das in der Abgasladepumpe 30 komprimierte Frischgas zugeführt und dort zur Einspeisung in den Brennraum 10 des Zylinders 2 bereitgehalten wird.

Die Stichleitung 28 zwischen der Impulsweiche 26 und der Abgasladepumpe 30 soll der Abgasdruckwelle im Sinne eines besonders hohen Impulsübertrags auf die Primärseite der Abgasladepumpe 30 möglichst wenig Impuls entziehen, was geringe Strömungsverluste bedingt. Daher werden bevorzugt Krümmungen in diesem Leitungsabschnitt weitgehend vermieden, oder, falls vorhanden, mit großen Krümmungsradien (vorzugsweise r ≥ 3-facher Rohrdurchmesser) ausgeführt. Auch ist der Fließquerschnitt der Stichleitung 28 vorteilhafterweise mindestens so groß wie der des Auslasskanals gewählt oder kann für geringe Druckverluste sogar bis zu 100% größer ausfallen. Vor dem Eintritt in die Abgasladepumpe 30 kann die Stichleitung 28 sich bereichsweise sukzessive verengen, um die Gasgeschwindigkeit und damit den Impuls der einströmenden Gasmasse noch weiter zu steigern.

Der Verbrennungsmotor 1 kann derart ausgeführt sein, dass das in der ersten Phase des Auslasstakts aus dem Zylinder 2 abströmende Abgas unmittelbar in das Primärgasvolumen 46 der Abgasladepumpe 30 gelangt. Besonders vorteilhaft und im Sinne einer thermischen Entkopplung der Abgasladepumpe 30 von den heißgasführenden Komponenten ist das System aber für einen mittelbaren Impulsübertrag ausgestaltet, bei dem in der ersten Taktphase des Auslasstakts der Impuls der aus dem Zylinder 2 abströmenden Abgasdruckwelle ganz oder teilweise auf ein im Primärgasvolumen 46 der Abgasladepumpe 30 bereits befindliches Gaspolster übertragen wird, so dass sich dieses nachfolgend arbeitsleistend wieder entspannen kann Die Stichleitung 28 und das Ab- oder Primärgasvolumen 46 der Abgasladepumpe 30 werden dabei vom Abgas im eigentlichen Sinn nicht durchströmt, sondern es findet lediglich ein Verschiebestrom statt. Die Gasmasse, die nach der Impulsweiche 26 in diesen Leitungsabschnitt fließt, läuft somit auf demselben Weg wieder zurück. In der Stichleitung 28 verbleibt nach jeder Impulsübertragung auf die Abgasladepumpe 30 eine mehr oder weniger ruhende Abgassäule, deren Druck auf dem Niveau des Abgasgegendrucks (1,1-1,6 bar) der Abgasanlage liegt, und deren Temperatur durch fortlaufende Wärmeabgabe an die sie umschließende Rohrwandung wesentlich niedriger ist als die Abgastemperatur beim Öffnen des Auslassventils 24. Läuft die Abgasdruckwelle beim Öffnen des Auslassventils 24 gegen die in der Stichleitung 28 vorhandenen Gassäule, so wird in die Abgasladepumpe 30 anfangs die kühlere Gasmasse geschoben, und erst nachfolgend und zu einem geringeren Teil fließt Abgas aus dem unmittelbaren Verbrennungstakt hinzu.

Bevorzugt ist dazu das Volumen der Stichleitung 28 mindestens so groß gewählt, dass es dem Expansions- oder Primärgasvolumen 46 in der Abgasladepumpe 30 unter Berücksichtigung des Kompressionsdrucks in der Abgasladepumpe 30 entspricht. Zur Einstellung des gewünschten Volumens wird dabei bei vorgegebenem Leitungsquerschnitt vorteilhafterweise die Länge der Stichleitung geeignet gewählt. Durch die geeignete Volumenwahl wird zwischen der Abgasladepumpe 30 und der Stichleitung 28 wiederholend großenteils dieselbe Abgassäule hin und her geschoben. Dies ermöglicht es, die Abgasladepumpe 30 thermisch weitgehend von dem hohen Temperaturniveau der Motorabgase zu entkoppeln und damit die thermische Bauteilbelastung erheblich zu reduzieren. Weiterhin kann damit der Wärmeübertrag in der Abgasladepumpe 30 von der Abgas- auf die Frischgasseite wesentlich verringert werden. Unter der Voraussetzung gleichen Motorhubvolumens und des Expansionsvolumens in der Abgasladepumpe

$$p_1/p_2 = \left(\frac{V_2}{V_1}\right)^{1,4})$$

30 ist (unter Berücksichtigung von beispielsweise bei einem Kompressionsdruck in der Abgasladepumpe 30 von 1,5 bar ein Volumen in der Stichleitung 28 vom mindestens 1-fachen, besonders bevorzugt mindestens 1,35-fachen Wert des Hubvolumens des Motors besonders vorteilhaft, so dass im Sinne eines bereits vorhandenen Gaspolsters lediglich bereits vorhandene Gasmasse aus der Stichleitung 28 in das Primärgasvolumen 46 der Abgasladepumpe 30 geschoben wird.

Bei einem Kompressionsdruck von 2 bar in der Abgasladepumpe 30 wäre hingegen ein Volumen des 1,64- fachen Wert des Hubvolumens des Motors für die Stichleitung 28 besonders bevorzugt. Je nach Verhältnis von Motorhubvolumen zu Expansionsvolumen und Kompressionsdruck der Abgasladepumpe 30 ist ein Mindestvolumen der Stichleitung 28 zwischen dem ein- bis zweifachen Wert des Motorhubvolumens als besonders vorteilhaft anzusehen, um möglichst keine heißen Abgasmassen unmittelbar in die Abgasladepumpe 30 beim Verdichtungsstoß eintreten zu lassen.

Durch dieses zur thermischen Isolierung vorteilhafte Mindestvolumen der Stichleitung 28 verringert sich allerdings die kinetische Abgasenergie ($E_{kin}=\frac{1}{2}mv^2$) durch Rohrreibungsverluste (Geschwindigkeitsabnahme) und mit dieser auch der Impuls ($I=mv$) der Druckwelle, so dass das Volumen bzw. die Länge der Stichleitung 28 aus strömungsmechanischer Sicht vorzugsweise nicht größer als das zur thermischen Entkopplung der Abgasladepumpe 30 notwendige Maß ausgeführt werden sollte. Es kann jedoch u. U. sinnvoll sein, die Gasmasse in der Stichleitung 28 durch eine weitere Volumen- bzw. Längenvergrößerung dieser Leitung zu erhöhen, um die Beträge der Massen von beschleunigter Gassäule und bewegter Trennwand einander anzunähern. In zusätzlicher vorteilhafter Ausgestaltung kann die Stichleitung 28 mittelbar oder unmittelbar kühlbar ausgeführt sein, um die Temperatur der verbleibenden Gassäule weiter zu verringern. Die Kühlung kann durch Luft- oder Flüssigkeitskühlung bewerkstelligt werden, in Form von Strahlungswärmeabgabe, Konvektionskühlung oder erzwungene Umströmung.

Ein besonderer Vorteil der thermischen Entkopplung der Abgasladepumpe 30 besteht darin, dass diese teilweise oder auch vollständig aus Kunststoffwerkstoffen hergestellt sein kann, so dass der Herstellungsaufwand bei hoher Flexibilität sehr gering gehalten werden kann. Für die Gehäusebauteile sind besonders bevorzugt Thermoplaste vorgesehen, die im Spritzgußverfahren preisgünstig hergestellt werden können, geringes Gewicht besitzen und gutes akustisches Verhalten aufweisen. Die elastische Zwischenwand 44 ist bevorzugt ebenfalls aus Kunststoff (Thermoplaste, Duroplaste; Gummi, etc.) hergestellt, wobei eine Verstärkung durch reißfeste Fasermaterialien vorteilhaft ist. Die Fasern werden vorteilhafter Weise mindestens einmal bidirektional gelegt.

Da die Abgasdruckwelle an der elastischen Zwischenwand 44 in der Abgasladepumpe 30 zumindest teilweise reflektiert wird, überträgt die Abgasdruckwelle auf die elastische Zwischenwand 44 mehr als den einfachen Impuls.

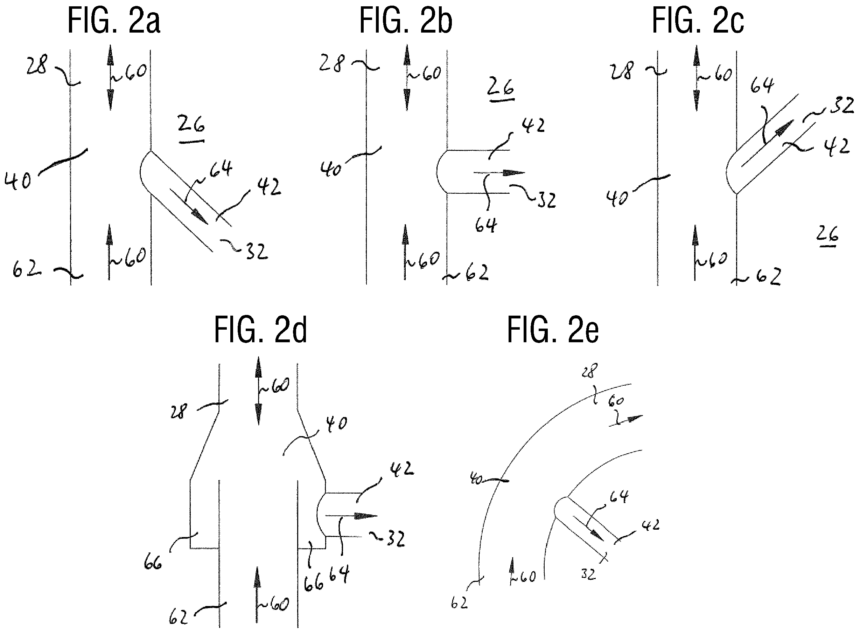

Die Impulsweiche 26 stellt in funktionaler Hinsicht vorzugsweise eine Rohrleitungsverzweigung dar und hat den besonderen Vorteil, dass sie keine bewegten Bauteile aufweist und damit besonders langlebig und wartungsarm ausgeführt sein kann. Sie ist im Wesentlichen dafür ausgelegt, den eingangsseitig eintreffenden Abgasimpuls möglichst verlustfrei oder verlustarm an die Stichleitung 28 und das sich ggf. darin befindliche Gaspolster weiterzuleiten. Wie den Ausführungsbeispielen gem. FIG. 2a - 2e entnehmbar ist, kann die Impulsweiche 26 dazu als T-Stück-artige, Y-Stück-artige oder Strahlpumpen-artige Rohrverzweigung ausgeführt sein, deren Hauptkanal 40 (charakterisiert durch die durch den Pfeil 60 symbolisierte Hauptströmungsrichtung für den Abgaspuls) den mit dem Auslassventilsystem 22 verbundenen Einströmbereich 62 für das Abgas möglichst geradlinig (Beispiele gem. FIG. 2a - 2d) oder leicht gekrümmt (Beispiel gem. FIG. 2e) mit der Stichleitung 28 zur Abgasladepumpe 30 verbindet. Vom Hauptkanal 40 zweigt der Abgaskanal 42 ab, durch den in der zweiten Taktphase des Auslasstakts das Abgas wie durch den Pfeil 64 symbolisiert zum Auspuffsystem 12 strömt. Die Kanalführung ist dabei bevorzugt derart gestaltet, dass die Impulsverluste für den eintreffenden Abgaspuls im Bereich der Impulsweiche 26 besonders gering gehalten werden.

Die Abgasdruckwelle, die aus dem Auslasskanal des Motors in die Impulsweiche 26 läuft, soll besonders bevorzugt durch die Impulsweiche 26 mit möglichst geringem Energieverlust zur Abgasladepumpe 30 geführt werden. Entsprechend der Gleichung von Bernoulli ($p + \frac{1}{2}\rho v^2 = const.$) bedeutet dies, dass der Staudruck im Hauptkanal 40 in der Impulsweiche 26 in Richtung des Abgaskanals 42 bevorzugt gleich dem statischen Druck im Abgaskanal 42 sein sollte. Dieses Auslegungsziel wird bevorzugt durch einen geraden Strömungsdurchgang im Hauptkanal 40 ohne Querschnittssprünge im Strömungsquerschnitt annähernd erfüllt. Der Abgaskanal 42 zum Auspuffsystem 12 ist vorzugsweise seitlich in der Impulsweiche 26 angebracht. Neben der in FIG. 2b dargestellten senkrechten Einmündung des Abgaskanals 42 in die Impulsweiche 26 sind auch schräge Anordnungen ("rückwärts geneigt" gem. FIG. 2a oder "vorwärts geneigt" gem. FIG. 2c) möglich. FIG. 2d zeigt demgegenüber die Anordnung des Abgaskanals 42 in Form eines Ringkanals 66 um den Hauptkanal 40. Dieser Aufbau ähnelt dem einer Strahlpumpe.

FIG.2e zeigt eine Ausführung der Impulsweiche 26 mit gekrümmtem Hauptkanal 40. Bei dieser Anordnung mündet der Abgaskanal 42 in vorteilhafter Ausgestaltung auf der Innenseite der Krümmung des Hauptkanals 40, da die Gasgeschwindigkeit in diesem Bereich der Rohrwandung am geringsten ist und die Impulsrichtung der Abgasdruckwelle weitgehend tangential zur Rohrmündung des Abgaskanals 42 weist. Grundsätzlich können zur Strömungsführung in der Impulsweiche 26 zusätzliche Leitbleche oder Blenden angebracht sein, um ein direktes Abfließen des Impulses der Abgasdruckwelle in den Abgaskanal 42 zu reduzieren oder um ein Gleichgewicht zwischen Staudruck und statischem Druck am Abgaskanal 42 zu begünstigen.

Um die Leitungsverluste der Abgasdruckwelle möglichst gering zu halten, ist die Impulsweiche 26 vorteilhaft möglichst nahe am Auslasskanal des Motors bzw. des Auslassventils 24 positioniert. Besonders bevorzugt ist die Impulsweiche 26 direkt am Auslasskanal des Zylinderkopfs des Verbrennungsmotors, insbesondere als erstes Bauteil einer Abgasanlage, positioniert oder sogar in der Art einer integrierten Ausführung direkt im Zylinderkopf platziert.

Im Ausführungsbeispiel ist eine Ausführung dargestellt, bei der einem einzelnen Zylinder 2 eine individuelle Impulsweiche 26 und entsprechend eine individuelle Abgasladepumpe 30 zugeordnet ist. Alternativ können aber auch mehrere Zylinder 2 bzw. deren Auslasskanäle an eine gemeinsame Impulsweiche 26 angeschlossen sein und somit eine den Zylindern 2 gemeinsame Abgasladepumpe 30 mit einer entsprechend erhöhten Taktfrequenz antreiben, wobei die Frischgasleitung 36 mit den Einlassventilen 16 eines oder mehrerer Zylinder 2 verbunden ist. Auch ist es möglich, mehrere Zylinder 2 mit ihnen jeweils individuell zugeordneten Impulsweichen 26 auf eine gemeinsame Abgasladepumpe 30 wirken zu lassen, indem die jeweiligen Stichleitungen 28 kurz vor Eintritt in die Abgasladepumpe 30 zusammengeführt werden.

Die als Druckspeicherleitung ausgeführte Frischgasleitung 36 hat über ihr Speichervolumen einen erheblichen Einfluss auf den Druckverlauf bei der Frischgaseinströmung (Ansaugphase) in den Zylinder 2. Bezogen auf das Hubvolumen des Zylinders 2 hat ein großes Speichervolumen einen geringeren, aber annähernd konstanten Spüldruck mit geringerer Kolbenarbeit und größerem Aufladegrad zur Folge. Umgekehrt tendiert ein kleines Speichervolumen einhergehend mit hohem Vordruck zu erhöhter Kolbenarbeit und geringerem Aufladegrad. Ein je nach Lastzustand des Motors abgestimmtes bzw. variables Speichervolumen der Frischgasleitung 36 ist für eine effiziente Nutzung der Abgasenergie vorteilhaft, wobei für Teillast bevorzugt vergleichsweise kleinere und für Volllast bevorzugt vergleichsweise größere Speichervolumina vorgesehen sind. Um das Speichervolumen der Frischgasleitung 36 entsprechend variabel oder einstellbar zu machen, können in bevorzugter Ausgestaltung entsprechende Stellelemente, beispielsweise in der Art geeigneter Einbauten, in oder an der Frischgasleitung 36 vorgesehen sein.

Die elastische Zwischenwand 44 der Abgasladepumpe 30 kann, anstatt ein Gasvolumen zu komprimieren, auch über mechanische Kopplungselemente, wie Schubstangen, Stößel, Kurbeltriebe, etc. direkt Stromgeneratoren (rotierend bzw. linear), Pumpen oder ähnliche Maschinen antreiben.

Im Ausführungsbeispiel gem. FIG. 1 umfasst die Frischgasleitung 36, in die die Abgasladepumpe 30 sekundärseitig geschaltet ist, einen Frischgassaugkanal 70, der mit einem Ventil 72 versehen ist, welches ausschließlich das Einströmen von Frischgas in die Sekundärseite der Abgasladepumpe 30 gestattet und ein Rückströmen unterbindet. Das Ventil 72 kann dementsprechend beispielsweise als Flatterventil ausgeführt sein. Auf der Frischgas- oder Sekundärseite der Abgasladepumpe 30 befindet sich als weiterer Bestandteil der Frischgasleitung 36 ein Frischgasdruckkanal 74, in den das von der Membran in der Abgasladepumpe 30 komprimierte Frischgas aus dieser verdrängt wird. Um ein Rückströmen des komprimierten Frischgases in die Abgasladepumpe 30 zu verhindern, ist der Frischgasdruckkanal 74 ebenfalls mit einem Ventil 76 versehen, das ausschließlich ein Ausströmen aus der Abgasladepumpe 30 in den Frischgasdruckkanal 74 gestattet, ein Rückströmen aber verhindert. Die Ventile 72,76 können vorteilhaft als selbstregelnde Rückschlagventile (Zungenventile) ausgeführt sein.

Um ein besonders hohes Kompressionsverhältnis auf der Frischgas- oder Sekundärseite der Abgasladepumpe 30 zu erreichen, befinden sich die Ventile 72,76 in besonders bevorzugter Ausgestaltung so nahe wie möglich am Kompressionsraum der Abgasladepumpe 30, um die Schadvolumina, die sich jeweils zwischen den Ventilen 72,76 und dem Kompressionsraum der Membran befinden, möglichst klein zu halten.

Der Frischgasdruckkanal 74 ist im Ausführungsbeispiel mit dem Ladeluftkühler 38 versehen, der das komprimierte Frischgas abkühlt. Alternativ oder zusätzlich kann die frischgasseitige Gehäusehälfte der Abgasladepumpe 30 bzw. die Leitungsführung für den Frischgasdruckkanal 74 selbst als Wärmetauscher (Kühler) ausgeführt sein.

Sobald sich das Gas in der Primärseite der Abgasladepumpe 30 genügend entspannt hat und das Abgas durch den Abgaskanal 42 abströmt, wird die Membran der Abgasladepumpe 30 mit Unterstützung einer Rückstellfeder in ihre Ruheposition bewegt, wobei das restliche Gas aus dem Primärvolumen 46 der Abgasladepumpe 30 ausgeschoben und gleichzeitig Frischgas über den Frischgassaugkanal 70 von der Abgasladepumpe 30 angesaugt wird. Das Arbeitsspiel der Abgasladepumpe 30 kann nun von neuem beginnen. Die Fördercharakteristik der Frischgasseite ist bei ausreichend bemessenen Fließquerschnitten der Ventile 72,76 und Kanäle etwa proportional zur Arbeitsfrequenz der Abgasladepumpe 30 bzw. der Motordrehzahl. Prinzipiell kann eine Abgasladepumpe 30 auch mit mehreren Motorzylindern betrieben werden, unter der Voraussetzung, dass hinsichtlich der Zündfolge der Motorzylinder keine Überschneidung der Spülphasen in der Abgasladepumpe stattfinden.

Das von der Abgasladepumpe 30 komprimierte Frischgas, das sich nun im Frischgasdruckkanal 74 befindet, kann nun in unterschiedlichen besonders Anwendungen zur Effizienzsteigerung genutzt werden:

1. Verfahren für positives Spülgefälle (Verbrauchsreduzierung)

Entsprechend dem in Fig.1 gezeigten Ausführungsbeispiel wird das aus der Abgasladepumpe 30 abströmende komprimierte Frischgas durch den Frischgasdruckkanal 74 zum Einlassventil 18 des Motors geleitet. Der Ladeluftkühler 38 kann wahlweise vorhanden sein. Das komprimierte Frischgas verweilt nach seiner Kompression in der Abgasladepumpe 30, also nach der ersten Taktphase des Auslasstakts, vorübergehend im Bereich des UT des Arbeitskolbens 4 über etwa 180°KW bis zum Ladungswechsel im oberen Totpunkt (OT), bei dem das Einlassventil 18 geöffnet wird, im Frischgasdruckkanal 74 einschließlich Ladeluftkühler 38. Der Frischgaskanal 74 wird somit in dieser Phase als Zwischenspeicher für das komprimierte Frischgas genutzt. Beim Öffnen des Einlassventils 18 strömt das Frischgas - anfangs unter Kompressionsdruck - in den Brennraum 10 des Zylinders 2 und entspannt sich dort bei abwärts gehendem Arbeitskolben 4 bis zum UT, womit auch eine Abkühlung (Expansionkühlung) des Frischgases einhergeht. Auf Grund des ausgeprägten positiven Spülgefälles wird während der Zylinderfüllung eine signifikante positive Arbeit am Arbeitskolben 4 geleistet, anstatt, wie bei Saugmotoren üblich, eine negative Saugarbeit während des Ansaughubs aufbringen zu müssen. Ist der Frischgasförderstrom der Abgasladepumpe 30 so groß wie das Schluckvermögen des Saugmotors, tritt keine Erhöhung des Liefergrads der Verbrennungsluft ein, womit die Motorleistung gegenüber der Ausführung als Saugmotor unverändert bleibt.

Die Höhe der zur Verfügung stehenden Abgasenthalpie, das Verhältnis des Motorhubvolumens zum Fördervolumen der Abgasladepumpe 30 und das Speichervolumen des als Zwischenspeicher vorgesehenen Frischgasdruckkanals 74 einschließlich des ggf. vorhandenen Ladeluftkühlers 38 sind in besonders vorteilhafter Ausgestaltung individuell aufeinander abgestimmt. Tendenziell kann bei einem hohen Abgasenthalpieangebot (z.B. niedrig verdichtete Motoren) ein großes Förderhubvolumen der Abgasladepumpe 30 mit einem vergleichsweise kleinen Speichervolumen des Frischgasdruckkanals 74 kombiniert werden, womit ein entsprechend großer Enthalpieentzug im Abgas nicht in eine Steigerung des Luftaufwands, sondern in eine Erhöhung des Kompressionsenddrucks im Frischgasdruckkanal 74 umgesetzt wird. Die Abgasladepumpe 30 wird in diesem Fall (konstanter Luftaufwand, höherer Kompressionsdruck) näher an ihrer Pumpgrenze betrieben. Folgerichtig wäre insbesondere im Teillastbetrieb des Verbrennungsmotors 1 eine Verkleinerung des Speichervolumens im Frischgasdruckkanal 74 sinnvoll, da in diesen Lastbereichen zumindest der Ottomotor fast ausschließlich luftmengenggeregelt betrieben wird. Ein variables Speichervolumen kann beispielsweise und in vorteilhafter Ausgestaltung durch mehrere Leitungsstränge, die individuell absperrbar sind, erreicht werden oder durch variable Volumina in Leitungskomponenten, die mittels verschiebbaren Einbauten (z.B.: verschiebbare Kolben-Zylindereinheiten) ihr Fassungsvermögen veränderlich gestalten lassen.

Eine Luftmengenreduzierung für den Teillastbetrieb von Ottomotoren, ohne Wirkungsgrad mindernde Drosselung der Abgasladepumpen-Frischgaszuführung, kann auch durch vorzeitiges Beenden der Frischgaszufuhr (Miller-Verfahren) in den Motor während des Saughubs erfolgen. Ventiltriebe mit variablem Einlassschluss, Lufttaktventile etc. können diese Aufgabe übernehmen.

Wegen des grundsätzlich erhöhten Spüldrucks von Frischgas im Ladungswechsel-OT (= LWOT) kann die Ventilüberschneidungsphase des Motors gegenüber einem Betrieb ohne Abgasladepumpe 30 wesentlich in den notwendigen Zeitquerschnitten verringert werden. Ein unerwünschtes Zurückschieben von Abgas (negatives Spülgefälle) in den Einlassbereich des Motors wird vor allem auch bei Teillast verhindert bzw. stark reduziert.

2. Verfahren für positives Spülgefälle und Aufladung (Verbrauchsreduzierung und Leistungssteigerung)

Dieses Verfahren ist mit dem vorstehend beschriebenen Verfahren (positives Spülgefälle) vom Systemaufbau und Betriebsmodus her weitgehend identisch, wird jedoch in eigenständig erfinderischer Ausgestaltung mit einer Abgasladepumpe 30 betrieben, die ein vergleichsweise größeres Frischgasfördervolumen besitzt, als es das Schluckvermögen des Verbrennungsmotors 1 darstellt. Der höhere Luftaufwand der Abgasladepumpe 30 führt zu einem höheren Liefergrad an Frischgas im Motor, da im Bereich des UT am Ende von dessen Ansaugtakt noch ein Überdruck im Frischgasdruckkanal 74 vorherrscht und dieser mit einer Ladungsdichtesteigerung einhergeht. Neben dem über den gesamten Ansaughub positiven Spülgefälle, das eine positive Kolbenarbeit indiziert, wird somit auch eine Drehmoment- bzw. Leistungssteigerung durch Ladungsdichteerhöhung herbeigeführt. Ist nun beabsichtigt, die Leistung des Motors unverändert zu belassen, so kann dieses Verfahren mit einer Hubraumverkleinerung (downsizing) des Motors kombiniert werden, womit sich geringere Wandwärmeverluste, Reibung und Gewicht verbrauchsreduzierend auswirken.

3. Verfahren für ausschließliche Aufladung (Drehmoment- bzw. Leistungssteigerung)

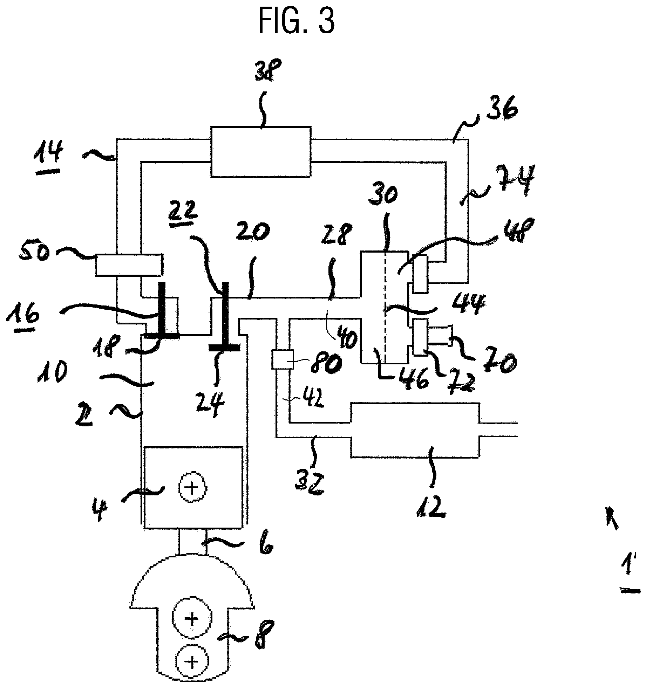

In der alternativen und als eigenständig erfinderisch angesehenen Ausführung des Verbrennungsmotors 1', wie sie schematisch in Fig.3 gezeigt ist, ist die Abgasladepumpe 30 ausschließlich zur Aufladung (Dichtesteigerung der Frischgasladung) vorgesehen. Der vornehmliche Unterschied zu der vorstehend erläuterten Alternative ist in der Auslegung der Frischgasversorgung des Verbrennungsmotors 1' zu sehen. Der Frischgasdruckkanal 74 mündet hierbei in den eigentlichen Motoreinlasskanal 80, der seinerseits ausgangsseitig über das Einlassventil 18 absperrbar in den Brennraum 10 mündet, und der zudem eingangsseitig noch eine Anbindung zur Atmosphärenluftversorgung 82 (Luftfilter), wie bei Saugmotoren üblich, besitzt. Im Motoreinlasskanal 80 ist dabei in Einströmrichtung des Gases gesehen vor der Einmündungsstelle des Frischgasdruckkanals 74 und besonders bevorzugt möglichst nahe am Einlassventil 18 ein Ventil 84 angeordnet, das in der Art eines Rückschlagventils ausgeführt ist ausschließlich eine Gasströmung in den Zylinder 2 hinein, nicht aber in Rückwärtsrichtung, gestattet. Das Ventil 84 ist vorteilhafterweise als selbstregelndes Rückschlagventil (Zungenventil) ausgeführt.

Der Frischgasdruckkanal 74 ist dabei seinerseits über ein steuerbares Frischgasventil 86 mit dem Motoreinlasskanal 80 verbunden, wobei das Frischgasventil 86 die aus der Abgasladepumpe 30 komprimierte Luft ausschließlich in den Kanalabschnitt 88 nach dem Ventil 84 entlässt. Der Kanalabschnitt 88 dient somit als Zwischenspeicher für die aus der Abgasladepumpe 30 abströmende komprimierte Luft. Das Frischgasventil 86 ist besonders bevorzugt möglichst nahe am Einlassventil 18 positioniert.

Der Ladungswechsel in der Abgasladepumpe 30 vollzieht sich bei dieser Variante ebenso wie in den vorstehend erläuterten Verfahren. Im Frischgasdruckkanal 74 wird das nahe dem UT des Motors komprimierte Frischgas zwischengespeichert, solange das Frischgasventil 86 geschlossen bleibt. Beginnt nun nach LWOT die Ansaugphase des Motors, so wird wie bei einem konventionellen Saugmotor atmosphärische Luft über das Ventil 84 und den Motoreinlasskanal 80 in den Brennraum 10 des Zylinders 2 gesaugt, bis im Bereich des LWUT kein nennenswerter Luftdurchsatz aus der Atmosphäre mehr stattfindet. Zu diesem Zeitpunkt öffnet das Frischgasventil 86, und die komprimierte Luft aus dem Frischgasdruckkanal 74 strömt in den Kanalabschnitt 88 nach dem Ventil 84. Mit dem damit einhergehenden Druckanstieg schließt das Rückschlagventil 84, und komprimierte Luft strömt ausschließlich in den Zylinder 2, bis dieser mit dem Kanalabschnitt 88 und dem Frischgasdruckkanal 74 im Druckausgleich steht oder das schließende Einlassventil 18 eine weitere Strömung unterbindet.

In vorteilhafter Ausgestaltung ist das Volumen des Kanalabschnitts 88 nach dem Ventil 84 vergleichsweise klein gehalten, besonders bevorzugt etwa bei 10-20% des Motorhubvolumens, um bei ausreichendem Spülvolumen im LWOT einen möglichst geringen Druckabfall in der Aufladungsphase am Einlassende zu verursachen. Der Druck des gespeicherten "Luftpolsters" im Einlasskanalbereich bei Einlassschluss baut sich auf Grund des geringen Speichervolumens im nächsten Spülvorgang schnell ab und indiziert daher nur geringe positive Kolbenarbeit.

Das Frischgasventil 86 schließt, wenn das Einlassventil 18 geschlossen ist, und bleibt geschlossen bis zum Ende der folgenden Ansaugphase.

Ein sukzessiv früheres Öffnen des Frischgasventils 86 in die Saugphase des Motors hinein lässt dieses Verfahren für ausschließliche Aufladung schrittweise in das Verfahren für positives Spülgefälle und Aufladung (Verbrauchsreduzierung und Leistungssteigerung) übergehen. In einer besonders vorteilhaften Ausgestaltung sind die Öffnungs- und Schließzeitpunkte des Frischgasventils 86 variabel einstellbar. Damit kann auf besonders einfache Weise und mit hohem Wirkungsgrad eine Laststeuerung hinsichtlich der Luftmenge vorgenommen werden.

Da in der Nähe des LWUTs kaum Kolbenbewegung stattfindet, wird durch den Druckanstieg im Zylinder auch keine wesentliche Kolbenarbeit geleistet bzw. absorbiert.

Prinzipbedingt verbleibt das Frischgas im Kanalabschnitt 88 auf dem Druckniveau, das am Ende der vorhergehenden Ansaugphase bei Einlassschluss anlag. Insbesondere bei hohen Lasten stellt sich hier ein beträchtlicher Überdruck ein, der bei nachfolgender Ventilüberschneidung im LWOT eine effektive Restgasausspülung ermöglicht und damit die Motorleistung positiv beeinflusst.

Dieses Aufladeverfahren nutzt die in der Abgasladepumpe 30 umgewandelte Abgasenthalpie soweit wie möglich zur Ladungsdichtesteigerung (Leistungssteigerung) und ist daher insbesondere für Motoren geeignet, die konstruktiv oder physikalisch weder über eine Hubraum- noch eine Drehzahlsteigerung in ihrer Leistung angehoben werden können.

Da nur ein Teil der vom Motor benötigten Frischluftmenge durch die Abgasladepumpe 30 komprimiert werden muss, lassen sich die Abgasladepumpe 30 und ebenso auch die Komponenten zur Ladeluftkühlung kleiner dimensionieren als es eine Auslegung für den gesamten Luftdurchsatz des Verbrennungsmotors 1 erfordern würde. Die geringeren Bauteilabmessungen und einhergehenden Gewichtsreduzierungen dieser Komponenten kommen insbesondere in Gewichts- und Bauraum-optimierten Fahrzeug- oder auch Flugmotoren vorteilhaft zur Geltung. Das Verfahren zur ausschließlichen Aufladung bzw. Nachladung zu einem vorher erfolgten Saughub kann in besonders einfacher Weise an einem Zweizylinderviertaktmotor mit 360° Zündversatz erfolgen. Dieser Motortyp kann wahlweise mit einer gemeinsamen oder einer jedem Zylinder zugeordneten Abgasladepumpe 30 betrieben werden. Die Frischgasleitung 36 der Abgasladepumpe 30 ist an beide Zylinder angeschlossen. Bei jedem Kompressionshub der Abgasladepumpe 30 im Bereich des UT des expandierenden Zylinders führt der Nachbarzylinder das Ende seines jeweiligen Saughubs aus. Just in diesem Zeitabschnitt wird in die Frischgasleitung 36 durch die Abgasladepumpe 30 Frischgas gedrückt, das verzögerungsfrei durch das noch geöffnete Einlassventil des Nachbarzylinders als "Nachladung" in den Zylinder geschoben wird. Dieses Verfahren vollzieht sich alle 360° KW im Wechsel der Zylinder. Werden zwei Abgasladepumpen 30, d.h. eine pro Zylinder verwendet, so sind die Frischgasleitungen 36 für den gewünschten Nachladeeffekt jeweils zum Nachbarzylinder geführt, um dem Phasenversatz im Arbeitsspiel gerecht zu werden.

4. Verfahren zum Antrieb einer separaten Expansionsmaschine

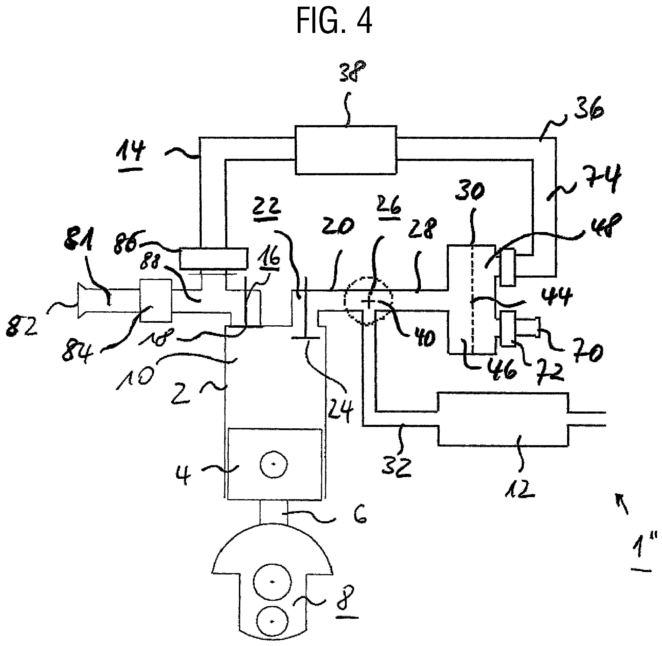

In einer alternativen besonders bevorzugten Ausführungsform, wie sie beispielhaft in Fig.4 gezeigt ist, wird die in der Abgasladepumpe 30 dem Abgas entzogene Enthalpie zum Antrieb einer separaten Expansionsmaschine 90 genutzt. Dementsprechend wird das in der Abgasladepumpe 30 enthalpieseitig aufgeladene Frischgas in dieser eigenständig erfinderischen Variante in der Expansionsmaschine 90 arbeitsleistend entspannt. Die schematische Darstellung des alternativen Verbrennungsmotors 1" in Fig. 4 zeigt, wie das von der Abgasladepumpe 30 erzeugte komprimierte Frischgas nicht dem Verbrennungszyklus des Verbrennungsmotors 1" zugeführt wird, sondern in der separaten Expansionsmaschine 90, beispielsweise einem Druckluftmotor, entspannt und dabei in mechanische Arbeit umgewandelt wird. Die Expansionsmaschine 90 kann beispielsweise als Flügelzellenmotor ausgeführt werden, der durch Kopplung mit einer Motorwelle (Kurbelwelle 8, Nockenwelle etc.) des Verbrennungsmotors 1 " seine Leistung in den Verbrennungsmotor 1" unmittelbar einspeist.

Dieses System ist regelungstechnisch sehr einfach zu beherrschen, da das komprimierte Frischgas aus der Abgasladepumpe 30 direkt in die Expansionsmaschine 90 geleitet wird und nicht getaktet werden muss. Auf eine Kühlung des komprimierten Frischgases kann in den meisten Fällen verzichtet werden, und die Länge der Frischgasdruckleitung 92 spielt eine untergeordnete Rolle. Insbesondere im Motorteillastbetrieb kann die in der Abgasladepumpe 30 umgewandelte Abgasenthalpie in Form ungedrosselter Frischgasströme durch die Expansionsmaschine 90 geleitet werden.

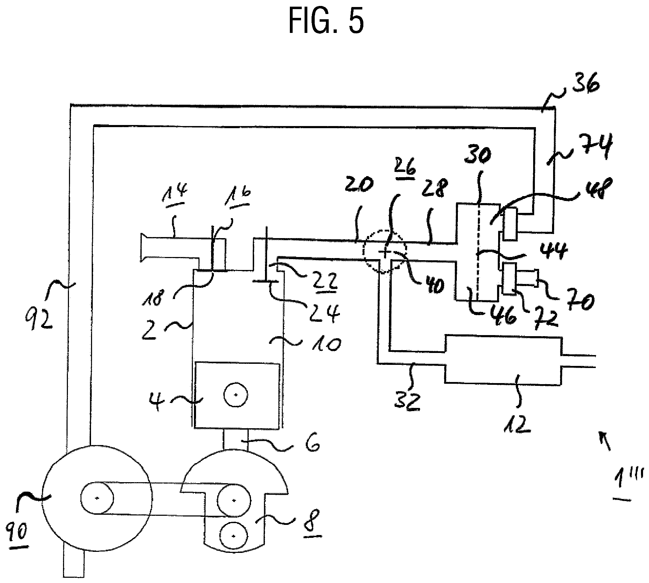

In den vorgenannten Beispielen wurde die Funktionsweise der Nutzung der Abgasenthalpie in der Abgasladepumpe 30 anhand von der Einbindung in die Gasführung bei 4-Takt-Motoren erläutert. Die Abgasladepumpe 30 kann aber auch an schlitzgesteuerten Verbrennungsmotoren betrieben werden, wie beispielsweise an schlitzgesteuerten Zweitaktmotoren, Wankelmotoren oder Drehschiebermotoren. In diesen Fällen sind keine Einlass- oder Auslassventile 18, 24 im eigentlichen Sinne vorhanden, und die Funktionalität des Gaseinlassventilsystems 16 und des Gasauslassventilsystems 22 werden über entsprechend angeordnete Steuerschlitze im Zylindermantel abgebildet. Ein Ausführungsbeispiel für diese Variante der Erfindung ist in der Schemadarstellung eines als Zweitaktmotor ausgeführten Verbrennungsmotors 1''' gem. Fig. 5 gezeigt.

Bei dieser Ausführung ist der Auslasskanal 94, der durch die Abwärtsbewegung des Arbeitskolbens 4 öffnet, ausgangsseitig über die Impulsweiche 26 mit der Primärseite der Abgasladepumpe 30 verbunden. Bei abwärts gehendem Arbeitskolben 4 wird das Abgas somit in der ersten Taktphase des Auslasstakts zur zumindest teilweisen Entspannung in Richtung zur Primärseite der Abgasladepumpe 30 geleitet. Bei weiter gehendem Arbeitskolben 4 wird anschließend in der zweiten Taktphase, also nach entsprechendem Impulsübertrag, das Abgas in der Primärseite der Abgasladepumpe 30 weiter entspannt und entweicht über das Auspuffsystem 12.

Die komprimierte Frischluft aus der Abgasladepumpe 30 wird in dieser Ausführungsform über den Frischgasdruckkanal 74 zu den Überströmkanälen 96 geführt, die beim Öffnen das Frischgas in den Zylinder 2 blasen und das Restgas ausspülen. Die Abgasladepumpe 30 kann somit die allgemein übliche Kurbelgehäuseladepumpe ersetzten und einen ölumlaufgeschmierten Kurbeltrieb ermöglichen oder die vorhandene Kurbelgehäuseladepumpe zusätzlich unterstützen.

Insbesondere können die Spülung der Abgasladepumpe 30 und die Spülung der Kurbelgehäuseladepumpe zeitlich nacheinander bzw. phasenverschoben im Zylinder über getrennte Überströmkanäle erfolgen. Dies ermöglicht beispielsweise eine Schichtladung im Zylinder, um Kraftstoffspülverluste zu unterbinden. Hierzu wird zu Beginn der Spülphase ausschließlich kraftstofffreie Frischluft aus der Abgasladepumpe 30 in den Zylinder gegen das Restgas geschoben, bis zu einem späteren Zeitpunkt der Spülphase diejenigen Überströmkanäle öffnen, die das Kraftstoffluftgemisch aus der Kurbelgehäusepumpe in den Zylinder leiten. Dieses Verfahren einer "Luftvorlagerung" reduziert Kraftstoffverluste bei der Spülung (HC-Emissionen) und ermöglicht weiterhin, die Gemischbildung am Motor über preiswerte Vergasertechnik zu vollziehen. Die Abgasladepumpe 30 übernimmt drehzahlunabhängig auch die die Ladungswechsel unterstützende Aufgabe der sonst bei Zweitaktmotoren üblichen voluminösen Resonanzauspuffanlage ohne deren drehzahlabhängige Resonanzeffekte.

Das Expansionsvolumen in der Primärseite in der Abgasladepumpe 30 beträgt in einer bevorzugten Ausgestaltung zwischen 30 bis 300% des Zylinderhubvolumens des Verbrennungsmotors 1. Die niedrigen Prozentwerte beziehen sich bevorzugt auf Verbrennungsmotoren mit geringen Abgasdrücken (2-3 bar) im Auslasskanal vor der Abgasladepumpe bzw. geringe Luftaufwände (Aufladung durch Nachladung). Große Expansionsvolumina der Abgasladepumpe 30 hingegen lassen sich effizient bevorzugt mit hohen Abgasdrücken (7-8 bar) kombinieren. Die entsprechend erzeugten hohen Luftaufwände in der Abgasladepumpe 30 können vorteilhaft über positives Spülgefälle mit Aufladung oder auch über eine separate Expansionsmaschine genutzt werden.

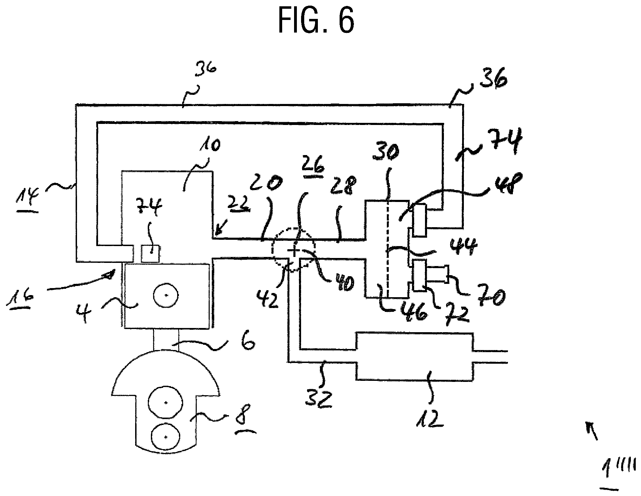

Der als eigenständig erfinderisch angesehene Aufbau der Abgasladepumpe 30 wird anhand der Querschnittsdarstellung in FIG. 6 näher erläutert. Grundsätzlich könnte die Abgasladepumpe 30 zwar als Faltenbalgpumpe oder entsprechend mit mehrteilig elastisch verformbaren Trenneinheiten ausgeführt sein; in der als besonders bevorzugt angesehenen Ausführung gem. FIG. 6 ist sie jedoch als Membranpumpe ausgeführt.

Die Abgasladepumpe 30 umfasst ein Druckgehäuse 100, dessen Innenvolumen 102 über eine die elastisch verformbare Trenneinheit oder Zwischenwand 44 bildende Membran 106 in eine Mehrzahl - im dargestellten Ausführungsbeispiel zwei - von gasseitig voneinander getrennten Teilvolumina 108, 110 aufgeteilt ist.

Zwischen einem primärgasseitigen Gehäusedeckel 112 (Primärseite) und einem frischgasseitigen Gehäusedeckel 114 (Sekundärseite), die gemeinsam das Druckgehäuse 100 bilden, befindet sich somit als elastisch verformbare Zwischenwand 44 die Membran 106. Diese trennt die beiden Teilvolumina 108,110 (Primärseite bzw. Sekundärseite), die sich zwischen der Membran 106 und den gewölbten Innenflächen 116,118 der beiden Gehäusedeckel 112 bzw. 114 aufspannen, gasdicht voneinander. Das erste Teilvolumen 108 bildet dabei in dem Sinne die Primärseite der Pumpe und somit das Primärvolumen 46 der Abgasladepumpe 30, dass in dieses Volumen der Abgasimpuls eingeleitet wird und damit die Pumpe treibt. Falls in dieses Primärvolumen 46 unmittelbar Abgas eingeleitet wird, steht dieses unter entsprechend hoher Temperatur, und demzufolge entspricht die hier genannte Primärseite der Heißseite einer direkt mit Abgas beaufschlagten Membranpumpe. Vorliegend wird bevorzugt aber der Gasimpuls nur mittelbar und über ein davorliegendes Gaspolster in das als Primärvolumen 46 dienende erste Teilvolumen 108 eingeleitet, ohne dass heißes Abgas unmittelbar einströmen müsste, so dass eine "Heißseite" nicht notwendigerweise vorliegt. Das zweite Teilvolumen 110 ist demgegenüber der Gasraum für das Frischgas, auf das die Enthalpie übertragen werden soll, und bildet somit die Sekundärseite der Pumpe.

Eine zusätzliche radial umlaufende Dichtung 120 zwischen den Gehäusedeckeln 112, 114 kann vorgesehen sein. Die Membran 106 kann unter Druckbeaufschlagung oder durch eine senkrecht auf sie wirkende Kraft unter elastischer Verformung ausgelenkt werden. Die Innenflächen 116,118 der beiden Gehäusedeckel 112,114 stellen die für die Membran 106 begrenzenden Anlageflächen unter maximaler zulässiger Membranauslenkung in die jeweilige Richtung dar. Die Membran 106 vollzieht zwischen ihren maximalen Auslenkungen in den Teilvolumina 108, 110 der Primär- bzw. Sekundärseite eine identische, aber entgegengesetzte Volumenänderung.

Als besonders vorteilhaft und eigenständig erfinderisch angesehen wird die Konturierung der innenseitigen, der Membran 106 zugewandten Innenflächen 116, 118 der beiden Gehäusedeckel 112, 114. Diese sind derart ausgestaltet, dass sie flächig die Anlageflächen für die Membran 106 im jeweils maximal ausgelenkten Zustand bilden, so dass die Membran 106 in diesen Zuständen jeweils weitgehend und nahezu vollflächig abgestützt ist. Aufgrund der Konturierung, wie sie insbesondere der Darstellung in Fig. 6 entnehmbar ist, kann die Membran 106 bei einer Positionsänderung oder Änderung ihrer Auslenkung auf der jeweiligen Innenfläche 116 bzw. 118 abrollen, so dass eine besonders materialschonende Arbeitsweise ermöglicht ist. Durch die Aufrollbewegung der Membran 106 auf die Innenfläche 116, 118 des jeweiligen Gehäusedeckels 112, 114 ergibt sich eine stetige Verzögerung der Membran 106 bis zu deren Stillstand ohne abrupten harten Anschlag in deren Endposition, so dass insbesondere die Lebensdauer der entsprechenden Komponenten besonders begünstigt ist.

Die Membran 106 ist mechanisch derart mit einer Vorspannkraft beaufschlagt, dass im drucklosen Zustand das zur Verbindung mit dem Abgassystem des Verbrennungsmotors vorgesehene Teilvolumen 108 im Rahmen der Verformbarkeit der Membran 106 einen Minimalwert aufweist. In diesem Zustand, der der Darstellung in Fig. 6 entspricht, liegt die Membran somit weitestgehend an der zu diesem Zweck geeignet konturierten und in ihrem Verlauf an die Membran 106 angepassten Innenfläche 116 des primärgasseitigen Gehäusedeckels 112 an. Zur Bereitstellung der genannten Vorspannkraft ist im Ausführungsbeispiel gem. Fig. 6 eine (oder bedarfsweise auch mehrere) Feder 122 vorgesehen. Diese lenkt die Membran 106 im drucklosen Zustand aus ihrer spannungsfreien Mittellage Richtung Innenfläche 116 des Gehäusedeckels 112 aus. Die Vorspannkraft der Feder(n) 122 ist dabei größer als die Rückstellkraft der maximal ausgelenkten Membran 106 gewählt, so dass die Membran 106 im Zustand ohne Gasdruckbeaufschlagung voll ausgelenkt auf der Innenfläche 116 des Gehäusedeckels 112 aufliegt. Die Feder 122 stützt sich ihrerseits am sekundärgasseitigen Gehäusedeckel 114 und über einen Federteller 124 ab, der mit der Membran 106 fest verbunden ist.

Im primärgasseitigen Gehäusedeckel 112 ist mindestens ein Abgaskanal 126 angeordnet, durch den Abgas bzw. die zur Impulsübertragung genutzte Gassäule in das das Primärgasvolumen 46 der Abgasladepumpe 30 bildende Teilvolumen 108 der Primärseite ein- bzw. ausströmen kann. Der Abgaskanal 126 ist in vorteilhafter Weise zentrisch im Gehäusedeckel 112 positioniert, um eine rotationssymmetrische Wärmebelastung und Druckausbreitung an der Membran 106 zu bewirken. Damit gegebenenfalls ein frontales Anströmen der Membran 106 mit heißem Abgas durch den Abgaskanal 126 vermieden wird und um die lokale Wärmebelastung in Membranmitte zu senken, ist in vorteilhafter Ausgestaltung an der Membran 106 - bevorzugt mittig - ein Hitzeschild 130 angebracht, an dem das einströmende Abgas radial in das sich öffnende Teilvolumen 108 der Primärseite umgelenkt wird. Der Hitzeschild 130 ist vorteilhafterweise gemeinsam mit dem Federteller 124 und der Membran 106 verbunden. Die zur Membran 106 gerichtete Auflagefläche des Hitzeschilds 130 liegt zwecks geringen Wärmeübergangs auf die Membran 106 auf dieser nur partiell auf.

Zum die Sekundärseite der Abgasladepumpe 30 bildenden zweiten Teilvolumen 110 und entsprechend durch den dieses begrenzenden Gehäusedeckel 114 hindurch führen mindestens ein Frischgassaugkanal 70 und mindestens ein Frischgasdruckkanal 74. Diese sind jeweils mit Rückschlagventilen (Zungenventilen) 132,134 ausgestattet, so dass ein Gasfluss im Frischgassaugkanal 70 ausschließlich in das Teilvolumen 110 der Sekundärseite der Abgasladepumpe 30 hinein und im Frischgasdruckkanal 74 ausschließlich aus dem Teilvolumen 110 der Sekundärseite heraus stattfinden kann. Zwecks hohen Kompressionsverhältnisses auf der Sekundärseite sind die Rückschlagventile 132,134 vorzugsweise so nahe wie möglich an der Innenfläche 118 des Gehäusedeckels 114 angebracht, um bei Auslenkung der Membran 106 an die Innenfläche 118 das verbleibende Restvolumen (Schadvolumen) zwischen Membran 106 und den Rückschlagventilen 132,134 möglichst klein zu halten. Die Mündung des Frischgassaugkanals 70 im Gehäusedeckel 114 ist in vorteilhafter Ausgestaltung derart positioniert, dass der Frischgasstrom beim Einströmen in die Abgasladepumpe 30 auf die Membran 106 an deren heißesten Flächenabschnitt trifft, d.h. in der Regel gegenüberliegend zum Abgaskanal 126. Damit kann das zugeführte Frischgas zu Kühlzwecken der Membran 106 in deren thermisch am höchsten belasteten Bereich genutzt werden. Vorteilhafterweise, insbesondere um einen eventuellen Wärmefluss von der Abgasseite auf die Frischgasseite einzuschränken, ist zudem ein thermisches Isolierelement 136 zwischen den Gehäusedeckeln 112, 114 vorgesehen, das im Ausführungsbeispiel durch eine zwischen den Gehäuserändern liegende umlaufende Materialeinlage geringer Wärmeleitfähigkeit realisiert ist und/oder auch geometrisch bedingt mit Hilfe einer möglichst reduzierten Anlagefläche der Gehäusedeckel zueinander umgesetzt werden kann.

Im Ruhezustand ist die Membran 106 in Folge der Vorspannung maximal auf die Primärseite ausgelenkt, und das Teilvolumen 108 der Primärseite ist minimal. Auf der Sekundärseite ist das entsprechende Teilvolumen 110 hingegen maximal mit Frischgas gefüllt. Wird nun die Primärseite durch den Abgaskanal 126 mit unter Druck stehendem Abgas (bzw. dem Gaspolster) aus dem Verbrennungsmotor beaufschlagt, so bewegt sich die Membran 106 Richtung Sekundärseite und verdrängt unter Kompression das im Teilvolumen 110 der Sekundärseite gespeicherte Frischgas durch das Rückschlagventil 134 in den Frischgasdruckkanal 74, bis die Membran 106 an der Innenfläche 118 anliegt. Entspannt sich nachfolgend der Gasdruck auf der Primärseite (beispielsweise durch beim "Zurückfluten" der Abgaswelle), so wird die Membran 106 durch die Feder 122 und die anfangs vorhandene Membranrückstellkraft wieder auf die Innenfläche 116 gedrückt. Das Gas auf der Primärseite wird komplett ausgeschoben und gleichzeitig das zunehmende Teilvolumen 110 auf der Sekundärseite mit Frischgas durch den Frischgassaugkanal 70 gefüllt. Die in der komprimierten Feder 122 gespeicherte Energie wird somit zum Ladungswechsel (Ausschieben von Abgas und Ansaugen von Frischgas) in der Abgasladepumpe 30 genutzt.

Die mechanische Bauteilbelastung kann vergleichsweise gering gehalten werden, so dass mit einfachen Mitteln eine hohe Langlebigkeit des Systems erreichbar ist. Die Innenflächen 116,118 sind in bevorzugter Ausgestaltung im Querschnitt als Kurvenbahnen ausgeführt, auf die die Membran 106 bei Auslenkung von ihrem äußeren Rand aus zur Membranmitte hin aufrollt und somit nicht abrupt anschlägt. Die Kurvenbahnen sind dabei in weiterer vorteilhafter Ausgestaltung in ihrer Geometrie an die Werkstoff- und Geometrieeigenschaften der Membran 106 angepasst ausgelegt, so dass die mechanische Belastung der Membran 106 möglichst gleichmäßig über deren Fläche verteilt ist und die Dauerfestigkeitsgrenzen des Membranwerkstoffs (in Abhängigkeit von der Werkstofftemperatur) nicht überschritten werden.

Die Membran 106 und die Feder 122 werden vorzugsweise ausschließlich elastisch verformt, es finden keine gleitenden Bewegungen statt. Die Abgasladepumpe 30 kommt somit vollkommen ohne Flüssigkeitsschmierung (Ölschmierung) aus.

Tribologisch vorteilhaft können die Innenflächen 116, 118 und/oder die Oberflächen der Membran 106 mit einem Trockenschmierstoff wie beispielsweise Graphit oder PTFE imprägniert werden, um verbesserte Abrolleigenschaften der Membran 106 bei Anlage an die Innenoberflächen 116, 118 der Gehäusedeckel 112,114 zu erhalten.

Im Ausführungsbeispiel gem. FIG. 6 ist die Abgasladepumpe 30 mit einer einteilig ausgeführten Membran 106 versehen. Diese kann als ebene, gewölbte, gewellte oder strukturierte Platte, aber auch als mehrfach gewelltes Bauelement, wie beispielsweise als Faltenbalg, ausgeführt sein. Vorteilhaft, aber nicht zwingend notwendig ist eine kreisrunde Außenkontur, da diese günstig und zuverlässig abgedichtet werden kann.

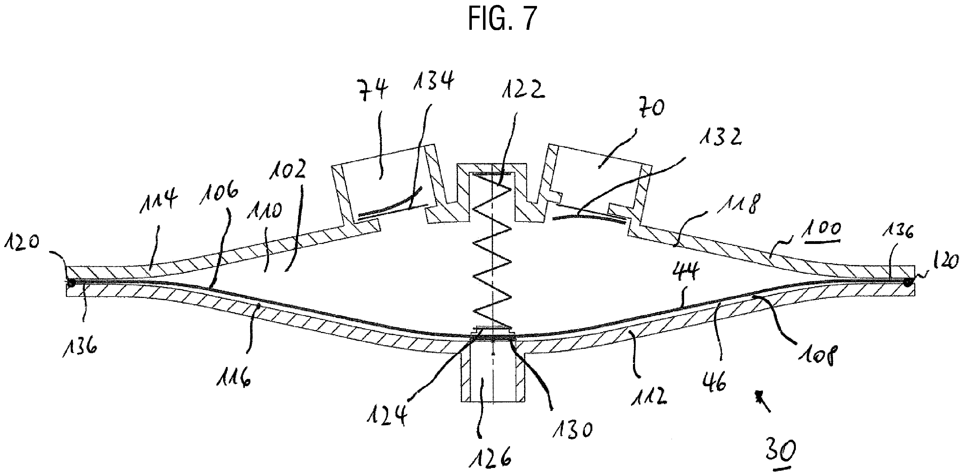

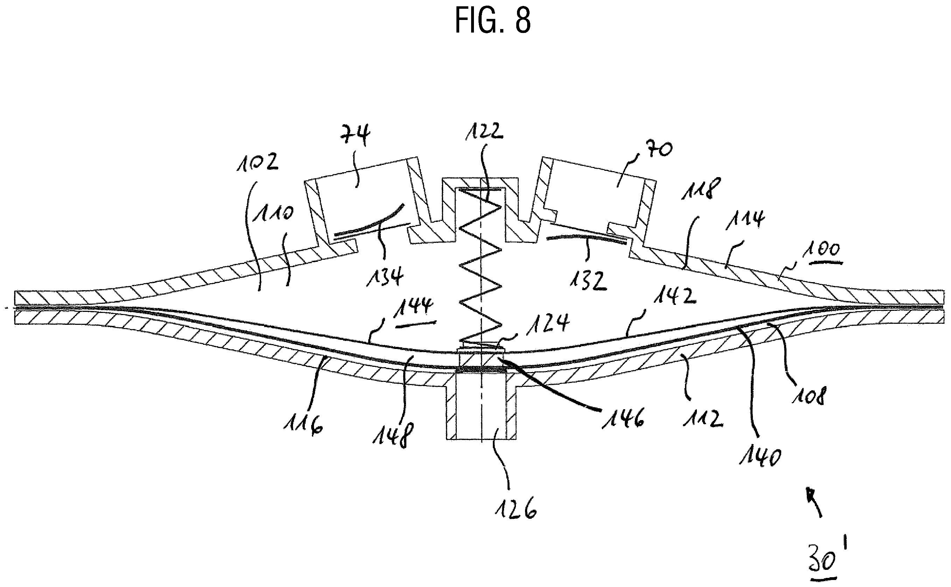

In einer alternativen, ebenfalls als eigenständig erfinderisch angesehenen Ausführungsform kann die Abgasladepumpe 30 auch als Membranpumpe mit doppel- oder mehrlagiger Membran ausgeführt sein. Beispiele für solchermaßen ausgelegte alternative Abgasladepumpen 30', 30" sind in Fig.7,8 jeweils im Querschnitt gezeigt. Hierbei bilden jeweils zwei parallel zueinander angeordnete Membranen 140,142 eine Doppelmembran 144. Die Membranen 140, 142 sind in den Ausführungsbeispielen jeweils über ein optionales Verbindungselement oder einen Abstandshalter 146 starr miteinander gekoppelt und trennen das Innenvolumen 102 des Druckgehäuses nunmehr in drei Teilvolumina 108, 110, 148, nämlich in die unverändert vorhandenen primär- bzw. sekundärseitig vorhandenen Teilvolumina 108 bzw. 110 und zusätzlich dazu nun noch das dazwischen gelegene dritte Teilvolumen 148.

Die Membran 140 verschließt dabei jeweils gasdicht mit einer Seite das als Abgasraum oder Primärseite der Abgasladepumpe 30', 30" dienende primärgasseitige Teilvolumen 108, und entsprechend verschließt die Membran 142 das als Frischgasraum oder Sekundärseite der Abgasladepumpe 30', 30" dienende sekundärgasseitige Teilvolumen 110. Eine Vorspannkraft, beispielsweise wiederum erzeugt durch eine Feder 122, drückt auf die Membran 142, die wiederum über den Abstandshalter 146 diese Bewegung an die Membran 140 weitergibt, bis die Membran 140 ihre maximale Auslenkung durch Anlage an der Innenwand 116 des Gehäusedeckels 112 eingenommen hat. Die Funktionsweise des Ladungswechsels der Abgasladepumpe 30', 30" mit Doppelmembran ist identisch zu der Bauart mit Einfachmembran. Der Raum zwischen den Membranen 140,142, also das dritte Teilvolumen 148, ist mit Gas gefüllt, vorzugsweise mit Luft, und stellt somit eine sehr gute Wärmeisolierung zwischen den Membranen 140,142 dar, so dass eine Aufheizung der Frischgasseite in der Abgasladepumpe 30' durch Wärmeeintrag aus der mit Abgas beaufschlagten Membran 140 quasi vermieden wird. Im Ausführungsbeispiel gem. FIG. 7 ist die Doppelmembran 144 dabei mit im Außenbereich aufeinander aufliegenden und einander berührenden Membranen 140, 142 ausgeführt, wohingegen die Membranen 140, 142 im Ausführungsbeispiel gem. FIG. 8 auch im Außenbereich beabstandet zueinander angeordnet sind; dabei wird der Abstand zwischen den Membranen 140, 142 mittels eines umlaufenden Abstandshalters 150 eingestellt.

Wie in FIG. 7,8 dargestellt, ist der Abstandshalter 146 zwischen den Membranen 140,142 vorzugsweise zentrisch, besonders vorteilhaft koaxial zur Feder 122 angeordnet. Es können aber auch mehrere Abstandshalter zwischen den Membranen 140, 142 angeordnet werden. Der oder die Abstandshalter 146 können beispielsweise als Scheiben bzw. Rohrabschnitte ausgeführt sein. Vorteilhafterweise liegen die Abstandshalter 146 über eine zwischenliegende federnde Scheibe größeren Durchmessers auf den Membranen 140, 142 auf, um die Flächenpressung zu reduzieren und um der Membran 140, 142 eine zusätzliche Versteifung bei Durchbiegung in diesem Bereich zu verschaffen. Bei sehr geringen Membranabständen können sogar ausschließlich federnde Scheiben als Abstandshalter 146 vorgesehen sein. Die Abstandshalter 146 sind vorzugsweise unverrückbar in Position gehalten und können beispielsweise mit der Membran 140, 142 vernietet, verschraubt oder allgemein formschlüssig fixiert sein.

Die Membranen 140, 142 müssen nicht zwangsläufig gleich groß sein, sondern können unterschiedliche Außendurchmesser, einschließlich entsprechender Gehäusedeckel, aufweisen. Mit dieser geometrischen Variation lassen sich in besonders vorteilhafter Weiterbildung unterschiedliche Fördervolumina auf Primär- und Sekundärseite der Abgasladepumpe 30', 30" realisieren. Ist der Membrandurchmesser und damit auch das Pumpvolumen der Frischgasseite kleiner als das der Abgasseite, so kann das Frischgas auf ein höheres Druckniveau komprimiert werden, was beispielsweise für Anwendungen erwünscht sein kann, die ein hohes Potential an Abgasenthalpie besitzen, jedoch keinen hohen oder gar reduzierten Luftaufwand benötigen. Im umgekehrten Anwendungsfall ließe sich tendenziell über eine kleine abgasseitige und größere frischgasseitige Membran 140, 142 bei kleinem Abgasenthalpieangebot ein hoher Frischluftdurchsatz auf niedrigem Druckniveau erzielen.

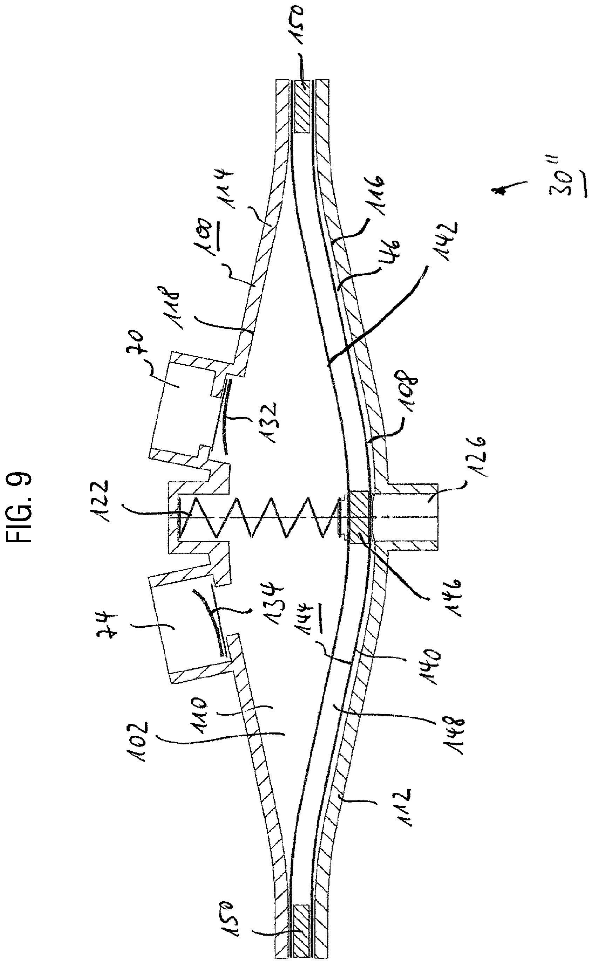

Die doppelte Membrananordnung insbesondere mit Abstandshalter erweist sich als besonders vorteilhaft hinsichtlich der Unterdrückung etwaiger Knickung oder Wellenbildung, die bei Membranbewegung durch deren spannungsfreien Mittendurchgang auftreten können. Um eine Wellenbildung der einfachen Membran zu unterbinden, kann beispielsweise, wie im Ausführungsbeispiel gem. FIG. 9 dargestellt, eine Linearführung 160 an der Membran 106 befestigt sein, die in einem der Gehäusedeckel 112, 114 geführt ist. Vorteilhafterweise befindet sich diese Linearführung 160 auf der Frischluftseite der Abgasladepumpe 30 und ist selbstschmierend ausgeführt. Alternativ kann um den Federteller der Membran 106 eine Stützscheibe befestigt werden, die einer asymmetrischen Verformung der Membran 106 entgegen wirkt.

Die Gehäusedeckel 112, 114 der Abgasladepumpe 30, 30', 30" können in allen genannten Varianten recht dünnwandig ausgeführt werden und somit auch preiswert als Blechumformteil hergestellt werden. Die Verbindungsebene der Gehäusedeckel 112, 114 liegt vorteilhafterweise parallel und nahe an der Einspannebene der Membran 106. Als Werkstoffe sind vorteilhafterweise warm- und korrosionsfeste Stähle zumindest für die Abgas- oder Primärgasseite vorteilhaft, wobei bei entsprechender Kühlung auch Aluminiumwerkstoffe in Betracht gezogen werden können. Auf der Frischgasseite kann zwecks guter Wärmeleitung vorteilhaft Aluminium gewählt werden.

Wird die Abgasladepumpe 30, 30', 30" hingegen, wie besonders bevorzugt vorgesehen, über eine entsprechend lang und/oder voluminös dimensioierte Stichleitung 28 von den Abgasdruckwellen angetrieben, so verhindert vorteilhafterweise die thermische Entkopplung der Abgasladepumpe 30, 30', 30" vom heißen Abgas ein nennenswertes Aufheizen der Abgasladepumpe 30, 30', 30" und somit auch eine unerwünschte Erwärmung des Frischgases in der Abgasladepumpe 30, 30', 30". Ebenso ermöglicht das so erzielbare niedrige Betriebstemperaturniveau der Abgasladepumpe 30, 30', 30" die besonders bevorzugt vorgesehene Verwendung von Kunststoffen als Material für die Gehäuseteile 112, 114. Dies stellt gegenüber metallischen Werkstoffen eine Gewichts - und Kostenreduzierung dar, wobei zudem auch noch ein verbessertes akustisches Verhalten erreichbar und eine freizügigere Formgebung ermöglicht ist. Für die Gehäuseteile 112, 114 sind besonders bevorzugt thermoplastische Werkstoffe für das Spritzgußverfahren vorgesehen. Zwecks geringer Körperschallabstrahlung können die Gehäusebauteile 112, 114 in Sandwichbauweise gefertigt oder mit schalldämmenden Materialien umhüllt werden.

Die jeweilige Membran 106, 140, 142 ist bevorzugt, insbesondere bei entsprechend niedriger Betriebstemperatur, ebenfalls aus Kunststoff bzw. Kunststoffverbundmaterialien (Gummi, Polyetheretherketone, Polyetherimid, Polyamid, etc.) hergestellt. Diese bieten einige entscheidende Vorteile gegenüber metallischen Werkstoffen. Ihr im allgemeinen geringeres Gewicht erhöht vorteilhaft die Eigenfrequenz der Membran, und das geringere E-modul von Kunststoffen ermöglicht bei identischer Flächenlast (Kraft bzw. Druck) eine höhere Auslenkung der Membran und damit mehr Fördervolumen pro Hub. Da Kunststoffmembranen im Allgemeinen leichter sind als Metallmembranen, können die Kunststoffmembranen beim Impulsübertrag eine höhere kinetische Energie aufnehmen. Insbesondere thermoplastische Werkstoffe weisen eine hohe Ermüdungsbiegebelastbarkeit auf, die in Verbindung mit Faserverstärkung, wie z. B. Glasfasern sehr elastische, aber auch reißfeste Verbundwerkstoffe darstellen.

Je nach Betriebstemperaturniveau der Abgasladepumpe 30, 30', 30" kann sich die Materialwahl von Gehäuse bzw. Membran ausschließlich auf metallischer Basis bei hohen Temperaturen bewegen oder bei niedrigen Temperaturen aus Kunststoffen bestehen. Auch gemischte Bauweisen sind denkbar, wie metallische Werkstoffe für die Abgasseite und Kunststoffe für die Frischluftseite.

Wird die Abgasladepumpe 30, 30', 30" auf einem Temperaturniveau um 100°C oder auch darunter betrieben, so kann sich beim Entspannen der Abgasdruckwelle in der Abgasladepumpe 30, 30', 30" Kondensat aus dem im Abgas enthaltenen Wasserdampf bilden. Insbesondere für den Einsatzfall, bei dem die Abgasladepumpe 30, 30', 30" nicht in entsprechender Lage positioniert ist, aus der das Kondensat zurück in die Abgasleitung fließen kann, ist in vorteilhafter Weiterbildung ein Kondensatablauf vorgesehen, um ein Ansammmeln von Kondensat im Primärvolumen 46 der Abgasladepumpe 30, 30', 30" zu unterbinden. Dieser Kondensatablauf ist vorteilhafterweise unter Ausnutzung der Schwerkraft des Kondensats an der tiefsten Stelle der Primärgasseite der Abgasladepumpe 30, 30', 30" angebracht. Um zu verhindern, daß Abgas durch den Kondensatablauf entweicht, kann dieser gasdicht ausgeführt werden, wie beispielsweise durch ein flüssigkeitsgesteuertes Schwimmerventil.

Betrachtet man den Ladungswechsel auf der Frischgasseite der Abgasladepumpe 30, 30', 30", so sollte beachtet werden, dass beispielsweise bei einem Einzylinder-Viertaktmotorzyklus die Kompression des Frischgases in der Abgasladepumpe 30, 30', 30" bei Nenndrehzahl des Motors nur ungefähr 40° Kurbelwelle beträgt, die Ansaugvorgang dem zufolge aber bis zu 680° Kurbelwelle dauern darf (720°-40°=680°). D.h. die zur Verfügung stehende Zeit zum Ansaugen von Frischgas ist nominell etwa 17-mal länger als die des Komprimierens und Ausschiebens. Dieses Verhältnis der Spülzeiten sollte sich bevorzugt umgekehrt proportional etwa in den Spülquerschnittsflächen der Rückschlagventile 132, 134 und der Kanalquerschnitte in den Kanälen 70, 74 auf der Frischgasseite wiederspiegeln. Vorteilhafterweise werden die großen Spülquerschnitte im Bereich des Ventils 134 zum Ausschieben des komprimierten Frischgases um den Flächenschwerpunkt der Abgasladepumpe 30, 30', 30" annähernd konzentrisch positioniert, da die Membran 106 gegen Ende des Kompressionshubs sich radial von außen nach innen am Gehäusedeckel 114 anlegt (aufrollt) und somit das Ausschieben von Frischgas nahe dem Membranmittelpunkt auf Grund des größeren Abstands der Membran vom Gehäuse mit geringeren Strömungsverlusten einhergeht.

Das bevorzugte Verhältnis der Spülquerschnitte ändert sich jedoch grundlegend, wenn mehrere Motorzylinder auf eine gemeinsame Abgasladepumpe 30, 30', 30" wirken. Während der Kompressionshub der Abgasladepumpe 30, 30', 30" zeitlich nahezu unverändert bleibt, steht für den Ansaugvorgang wesentlich weniger Zeit zur Verfügung. Beispielsweise ergeben sich für einen Zweizylinderviertaktmotor mit gleichem Zündabstand von 360° Kurbelwelle wieder circa 40° Kurbelwelle für die Kompression, aber nur 320° Kurbelwelle (360°-40°=320°) für den Ansaugvorgang. Betrachtet man die Spülzeiten der Abgasladepumpe 30, 30', 30" am Einzylinderzweitaktmotor, so können für den Kompressionshub etwa 15-25° Kurbelwelle Vorauslass angesetzt werden und circa 200-250° Kurbelwelle für die Ansaugvorgang.

Die Einbauposition der Abgasladepumpe 30, 30', 30" am Motor bzw. am Fahrzeug erfährt durch die Möglichkeit der Anbindung der relativ langen Stichleitung 28 eine hohe Gestaltungsfreiheit. So muss die ALP nicht unmittelbar in Zylinderkopfnähe positioniert werden, sondern kann auch im Bereich des unteren Kurbelgehäuses auf der Abgas- oder Ansaugseite angebracht werden bzw. sogar unter die Ölwanne positioniert werden. Betrachtet man insbesondere die Platzverhältnisse am Zweiradfahrzeug, so erweist sich die Unterbringung der Abgasladepumpe 30, 30', 30" hinter dem Motor oberhalb des Getriebes als günstig oder im s. g. Rahmendreieck, sprich unter der Sitzposition des Fahrers. Bei schmal bauenden Motoren, wie beispielsweise Einzylindermotoren, kann die Abgasladepumpe 30, 30', 30" auch seitlich neben dem Zylinder positioniert werden oder gar als Bestandteil in den Ventildeckel des Zylinderkopfs integriert werden. Der Ansauggeräuschdämpfer einschließlich Luftfilterelement kann Bauraum- und Kosten sparend mit dem Gehäusedeckel 114 der Frischluftseite der Abgasladepumpe 30, 30', 30" zu einer Baugruppe zusammengefasst werden.

Die Gehäusedeckel 112, 114 können neben ihrer eigentlichen Funktion zusätzlich als Wärmetauscher ausgeführt sein, indem deren Außenflächen beispielsweise mit Hilfe von Verrippungen einem kühlenden Luftstrom ausgesetzt werden oder die Außenflächen von einer Kühlflüssigkeit umspült werden. Der Wärmeentzug am primärseitigen Gehäusedeckel 112 hat vorteilhaft zur Folge, dass damit auch die Membranarbeitstemperatur gesenkt wird, da sowohl die mittlere Abgastemperatur niedriger ausfällt, als auch der Wärmestrom von der Membran 106 auf den Gehäusedeckel 112 wegen der größeren Temperaturdifferenz höher ist. Ein Wärmeentzug am sekundärseitigen Gehäusedeckel 114 übernimmt die Funktion einer Ladeluftkühlung, womit unter Umständen auf einen separaten nachgeschalteten Ladeluftkühler 38 verzichtet werden kann oder alternativ eine höhere Gesamtkühlleistung einschließlich Ladeluftkühler 38 erreichbar wäre. Die aus der Abgasladepumpe 30 entzogene Wärmeleistung kann insbesondere bei Anwendungen im Bereich der Kraft-Wärme-Kopplung zu Heizzwecken genutzt werden.

Bezugszeichenliste

| | |
|---|---|
| 1 | Verbrennungsmotor |
| 2 | Zylinder |
| 4 | Arbeitskolben |
| 6 | Pleuel |
| 8 | Kurbelwelle |
| 10 | Brennraum |
| 12 | Auspuffanlage |
| 14 | Gaseinlasssystem |
| 16 | Einlassventilsystem |
| 18 | Einlassventil |
| 20 | Abgasstrang |
| 22 | Auslassventilsystem |
| 24 | Auslassventil |
| 26 | Impulsweiche |
| 28 | Stichleitung |
| 30 | Abgasladepumpe |
| 32 | Abgasleitung |
| 36 | Frischgasleitung |
| 38 | Ladeluftkühler |
| 40 | Hauptkanal |
| 42 | Abgaskanal |
| 44 | elastische Zwischenwand |
| 46 | Primärgasvolumen |
| 48 | Frischgasvolumen |
| 50 | Zusatzventil |
| 60,64 | Pfeil |
| 62 | Einströmbereich |
| 66 | Ringkanal |
| 70 | Frischgassaugkanal |
| 72 | Ventil |
| 74 | Frischgasdruckkanal |
| 76 | Ventil |
| 80 | Motoreinlasskanal |
| 82 | Atmosphärenluftversorgung |
| 84 | Ventil |
| 86 | Frischgasventil |
| 88 | Kanalabschnitt |
| 90 | Expansionsmaschine |
| 92 | Frischgasdruckleitung |
| 94 | Auslasskanal |
| 96 | Überströmkanal |
| 100 | Druckgehäuse |
| 102 | Innenvolumen |
| 106 | Membran |
| 108 | Teilvolumen |
| 110 | Teilvolumen |
| 112 | Abgasseitiger Gehäusedeckel |
| 114 | Frischgasseitiger Gehäusedeckel |
| 116 | Innenfläche |
| 118 | Innenfläche |
| 120 | Dichtung |
| 122 | Feder |
| 124 | Federteller |
| 126 | Abgaskanal |

| | |
|---|---|
| 130 | Hitzeschild |
| 132 | Rückschlagventil |
| 134 | Rückschlagventil |
| 136 | Isolierelement |
| 140 | Membran |
| 142 | Membran |
| 144 | Doppelmembran |
| 146 | Abstandshalter |
| 148 | Teilvolumen |
| 150 | Abstandshalter |
| 160 | Linearführung |

**Patentansprüche**

1. Verbrennungsmotor (1, 1', 1", 1''') mit einer Anzahl von Zylindern (2), in denen jeweils ein auf eine gemeinsame Kurbelwelle (8) wirkender Arbeitskolben (4) geführt ist, wobei der Brennraum (10) des oder jedes Zylinders (2) jeweils einlassseitig über ein ansteuerbares Einlassventilsystem (16) mit einem Gaseinlasssystem (14) und auslassseitig über ein ansteuerbares Auslassventilsystem (22) über eine Impulsweiche (26) sowohl mit einer Auspuffanlage (12) als auch mit der Primärseite einer Abgasladepumpe (30, 30',30") verbunden ist, wobei die Impulsweiche (26) einen eingangsseitig mit dem Auslassventilsystem (22) und ausgangsseitig mit der Primärseite der Abgasladepumpe (30, 30',30") verbundenen Hauptkanal (40) und einen von diesem abzweigenden, ausgangsseitig mit der Auspuffanlage (12) verbundenen Abgaskanal (42) aufweist und den Impuls des Abgasstroms beim Öffnen des Auslassventilsystems (22) möglichst vollkommen in die Primärseite der Abgasladepumpe (30, 30',30") oder in eine dieser vorgeschaltete Stichleitung (28) zu leiten.

2. Verbrennungsmotor (1, 1', 1", 1''') nach Anspruch 1, bei dem die den ausgangsseitigen Teil des Hauptkanals (40) umfassende, die Impulsweiche (26) mit der Primärseite der Abgasladepumpe (30, 30',30") verbindende Stichleitung (28) ein Volumen von mehr als dem 1-fachen, vorzugsweise von mehr als dem 1,3-fachen, des Hubraums des oder der Zylinder (2) aufweist.

3. Verbrennungsmotor (1, 1', 1") nach Anspruch 1 oder 2, dessen Abgasladepumpe (30, 30',30") sekundärseitig an einen Frischgasdruckkanal (74) und an einen Frischgassaugkanal (70) angeschlossen ist, wobei durch den Frischgassaugkanal (70) die Sekundärseite der Abgasladepumpe (30, 30',30") mit Frischgas befüllbar ist, und wobei der Frischgasdruckkanal (74) zur Weiterleitung und/oder Zwischenspeicherung des in der Abgasladepumpe (30, 30',30") komprimierten Frischgases vorgesehen und ausgelegt ist.

4. Verbrennungsmotor (1, 1', 1", 1''') nach einem der Ansprüche 1 bis 3, dessen Impulsweiche (26) als T-Stück-artige oder Strahlpumpen-artige Rohrverzweigung ausgeführt ist, deren Hauptkanal (40) den mit dem Auslassventilsystem (22) verbundenen Einströmbereich (62) für das Abgas möglichst geradlinig mit der Primärseite der Abgasladepumpe (30, 30',30") bzw. mit der dieser vorgeschalteten Stichleitung (28) verbindet.

5. Verbrennungsmotor (1, 1', 1 ", 1''') nach einem der Ansprüche 1 bis 3, dessen Impulsweiche (26) einen gekrümmten Hauptkanal (40) aufweist, der den mit dem Auslassventilsystem (22) verbundenen Einströmbereich (62) für das Abgas mit der Primärseite der Abgasladepumpe (30, 30',30") bzw. mit der dieser vorgeschalteten Stichleitung (28) verbindet, wobei der ausgangsseitig mit der Auspuffanlage (12) verbundene Abgaskanal (42) auf der Innenseite der Krümmung des Hauptkanals (40) von diesem abzweigt.

6. Verbrennungsmotor (1, 1', 1", 1''') nach einem der Ansprüche 1 bis 5, dessen Abgasladepumpe (30, 30',30") als Membranpumpe ausgeführt ist.

7. Verbrennungsmotor (1, 1', 1", 1''') nach einem der Ansprüche 1 bis 6, der als Zwei- oder Viertaktmotor ausgelegt ist.

# FIG. 1

FIG. 2a

FIG. 2b

FIG. 2c

FIG. 2d

FIG. 2e

# FIG. 3

FIG. 4

## FIG. 5

# FIG. 6

FIG. 7

EP 3 514 347 A1

FIG. 8

# FIG. 9

EP 3 514 347 A1

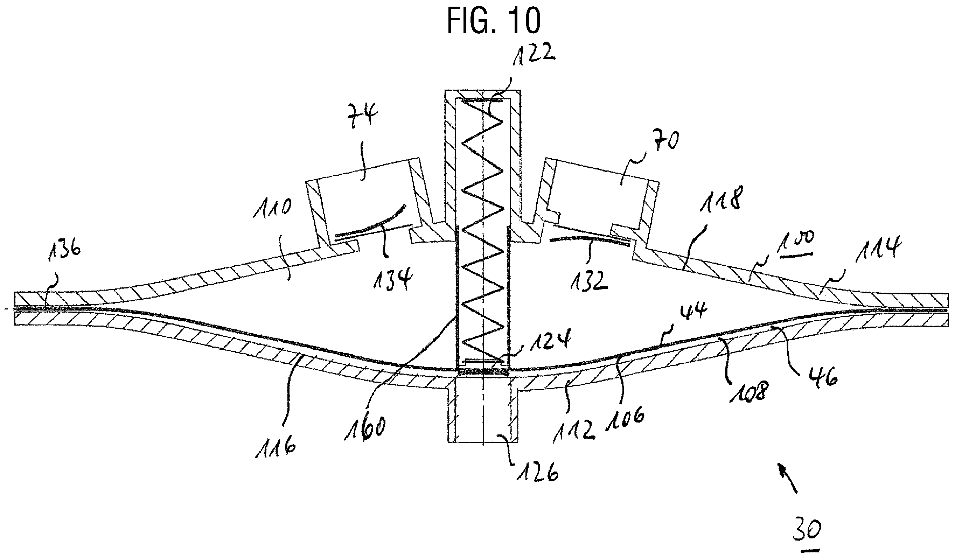

# FIG. 10

Europäisches
Patentamt

European
Patent Office

Office européen
des brevets

# EUROPÄISCHER RECHERCHENBERICHT

**Nummer der Anmeldung**

EP 19 15 7101

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S58 173727 U (.) 19. November 1983 (1983-11-19) * Absatz [0002]; Abbildung 1 * ----- | 1-7 | INV. F02B27/00 F02B33/32 F02B29/00 |
| X | JP H05 60041 A (SUZUKI MOTOR CO) 9. März 1993 (1993-03-09) * Zusammenfassung; Abbildung 1 * ----- | 1,3-7 | F02B33/42 F02B37/00 F02B37/16 F04B43/00 |
| X | EP 2 206 904 A1 (TOYOTA MOTOR CO LTD [JP]) 14. Juli 2010 (2010-07-14) * Absatz [0012] - Absatz [0049]; Abbildung 1 * ----- | 1,3,4,7 | F04B45/04 F04B45/053 |
| A | DE 10 03 503 B (GUSTAV SANDVOSS) 28. Februar 1957 (1957-02-28) * Spalte 1, Zeile 31 - Spalte 2, Zeile 39; Abbildung 1 * ----- | 1,6 | |
| A | FR 1 031 061 A (M. DUBUIS) 19. Juni 1953 (1953-06-19) * das ganze Dokument * ----- | 1,6 | |

**RECHERCHIERTE SACHGEBIETE (IPC)**

F02B
F04B

Der vorliegende Recherchenbericht wurde für alle Patentansprüche erstellt

| Recherchenort | Abschlußdatum der Recherche | Prüfer |
|---|---|---|
| München | 26. März 2019 | Tietje, Kai |

**ANHANG ZUM EUROPÄISCHEN RECHERCHENBERICHT
ÜBER DIE EUROPÄISCHE PATENTANMELDUNG NR.**

EP 19 15 7101

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-03-2019

| Im Recherchenbericht angeführtes Patentdokument | Datum der Veröffentlichung | Mitglied(er) der Patentfamilie | Datum der Veröffentlichung |
|---|---|---|---|
| JP S58173727 U | 19-11-1983 | KEINE | |
| JP H0560041 A | 09-03-1993 | KEINE | |
| EP 2206904 A1 | 14-07-2010 | CN 101849091 A<br>EP 2206904 A1<br>JP 4877200 B2<br>JP 2009114944 A<br>US 2010263638 A1<br>WO 2009060799 A1 | 29-09-2010<br>14-07-2010<br>15-02-2012<br>28-05-2009<br>21-10-2010<br>14-05-2009 |
| DE 1003503 B | 28-02-1957 | KEINE | |
| FR 1031061 A | 19-06-1953 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3625050 A1
- DE 3625048 A1
- DE 3625051 A1

- DE 3625053 A1
- DE 3318136 A1

**In der Beschreibung aufgeführte Nicht-Patentliteratur**

- **SCHATZ et al.** Pulse Charging - a new approach for dynamic charging. *Second International Conference New Development Powertrain Chassis,* 1989